# EUROPEAN PATENT SPECIFICATION

(11) **EP 4 253 114 B1**
(45) Date of publication and mention of the grant of the patent: **28.01.2026**
(21) Application number: 21903434.5
(22) Date of filing: 08.12.2021
(51) Int. Cl.: B60K 1/04, H01M 50/20

(54) **AUTOMOTIVE BATTERY CASE AND METHOD FOR MANUFACTURING SAME**
AUTOMOBILBATTERIEGEHÄUSE UND VERFAHREN ZUR HERSTELLUNG DAVON
BOÎTIER DE BATTERIE AUTOMOBILE ET SON PROCÉDÉ DE FABRICATION

(30) Priority: 08.12.2020 JP 2020203266
(43) Date of publication of application: 04.10.2023
(73) Proprietor: NIPPON STEEL CORPORATION, Chiyoda-ku Tokyo 100-8071 (JP)
(72) Inventor: SONOBE, Soma, Tokyo 100-8071 (JP)
(74) Representative: Vossius & Partner Patentanwälte Rechtsanwälte mbB
(86) International application number: PCT/JP2021/045137
(87) International publication number: WO 2022/124335

(56) References cited:
- WO-A1-2019/176792
- DE-B4- 102016 013 633
- JP-A- 2013 201 112
- JP-A- 2013 201 112
- JP-A- 2014 509 974
- JP-A- 2019 018 823
- JP-A- 2020 189 567
- JP-A- 2020 189 567
- US-B2- 10 044 006

## Description

### TECHNICAL FIELD

The present invention relates to a battery case of an automobile and a method for manufacturing the same.

### BACKGROUND ART

In recent years, the severity of restriction on fuel consumption of automobiles in the world promotes development of an electric vehicle (EV). A battery is disposed under the floor in the electric vehicle, which requires high energy absorption performance for a battery case to protect the battery at collision time.

Some techniques of the battery case are described in Patent Documents 1 to 5. Patent Document 1 discloses a battery pack case assembly constituted by an upper cover, and a lower case composed of a fiber reinforced plastics composite material. The lower case disclosed in Patent Document 1 has a closed cross-section region formed by joining an upper plate and a lower plate, and the energy absorption performance is improved by this closed cross-section region. Patent Documents 2 to 5 each disclose a battery case including iron side edge support members supporting a battery tray. The battery case in each of Patent Documents 2 to 5 has a structure in which iron side blocks are fixed on upper sides of both ends of the side edge support members as impact-resistant members. Patent Document 6 relates to a lower body structure of an electric vehicle with a battery unit located between a pair of floor frames. Patent Document 7 relates to a battery pack case assembly for an electric vehicle.

### PRIOR ART DOCUMENT

### PATENT DOCUMENT

Patent Document 1: Japanese Laid-open Patent Publication No. 2012-094476
Patent Document 2: Japanese Patent No. 4345812
Patent Document 3: Japanese Patent No. 4868048
Patent Document 4: Japanese Patent No. 4924684
Patent Document 5: Japanese Patent No. 5163628
Patent Document 6: Japanese Laid-open Patent Publication No. 2020-189567
Patent Document 7: Japanese Laid-open Patent Publication No. 2013-201112

### SUMMARY OF THE INVENTION

### PROBLEMS TO BE SOLVED BY THE INVENTION

In the lower case in Patent Document 1, a flange portion in which mounting holes are formed serves as a connecting portion to a vehicle body side structural member such as a side sill, but Patent Document 1 does not disclose a technique of improving the energy absorption performance by using the flange portion. In each of the battery cases in Patent Documents 2 to 5, a plurality of the side blocks fixed on the upper sides of the side edge support members are arranged at intervals, and the side block to which a collision load is not input depending on a collision point is also present. That is, the battery cases in Patent Documents 2 to 5 each have a structure in which the side block without contributing to an improvement in energy absorption performance is present, to thus have room for improvement in the viewpoint of the energy absorption performance.

The present invention has been made in consideration of the above circumstances, and has an object to improve energy absorption performance of a battery case.

### MEANS FOR SOLVING THE PROBLEMS

An aspect of the present invention for solving the above problems is a battery case of an automobile, the battery case includes: a battery tray; a plurality of cross frame parts; and an impact absorbing member, wherein: the battery tray has a bottom surface, a first side portion, and a second side portion; the first side portion and the second side portion face each other; the plurality of cross frame parts extend in a direction from the second side portion toward the first side portion; the plurality of cross frame parts are arranged at intervals along a longitudinal direction of the first side portion; the impact absorbing member is joined to an outer side of at least the first side portion of the first side portion and the second side portion; and the impact absorbing member includes a corrugated portion, wherein: the corrugated portion is formed in at least a longer range than an interval between the two cross frame parts; the corrugated portion has a plurality of bottom surfaces and a plurality of convex portions; the bottom surfaces of the corrugated portion are each between the convex portions; the convex portion has a top surface, two side surfaces, and two ridge lines; the two side surfaces of the convex portion face each other; the two ridge lines of the convex portion are ridge lines connecting the top surface of the convex portion and the two side surfaces of the convex portion; and the two ridge lines of the convex portion extend in the direction from the second side portion toward the first side portion.

An aspect of the present invention according to another viewpoint is a method for manufacturing a battery case of an automobile, the method includes manufacturing the battery case including: a battery tray; a plurality of cross frame parts; and an impact absorbing member, wherein: the battery tray has a bottom surface, a first side portion, and a second side portion; the first side portion and the second side portion face each other; the plurality of cross frame parts extend in a direction from the second side portion toward the first side portion; the plurality of cross frame parts are arranged at intervals along a longitudinal direction of the first side portion; and the impact absorbing member includes a corrugated portion, wherein: the corrugated portion is formed in at least a longer range than an interval between the two cross frame parts; the corrugated portion has a plurality of bottom surfaces and a plurality of convex portions; the bottom surfaces of the corrugated portion are each between the convex portions; the convex portion has a top surface, two side surfaces, and two ridge lines; the two side surfaces of the convex portion face each other; and the two ridge lines of the convex portion are ridge lines connecting the top surface of the convex portion and the two side surfaces of the convex portion, by joining, of both end face portions of the impact absorbing member in an extending direction of the two ridge lines of the convex portion, one of the end face portions to an outer side of at least the first side portion of the first side portion and the second side portion of the battery tray.

### EFFECT OF THE INVENTION

It is possible to improve energy absorption performance of the battery case.

### BRIEF DESCRIPTION OF THE DRAWINGS

FIG. 1 is a view illustrating a schematic configuration of a battery case according to a first embodiment of the present invention.
FIG. 2 is an enlarged view of an impact absorbing member in FIG. 1.
FIG. 3 is a view of the impact absorbing member being seen from above.
FIG. 4 is a view illustrating a cross section taken along A-A in FIG. 2.
FIG. 5 is a view illustrating a battery case according to a second embodiment of the present invention.
FIG. 6 is a view illustrating a cross section taken along B-B in FIG. 5.
FIG. 7 is a view illustrating a battery case according to a third embodiment of the present invention.
FIG. 8 is a view illustrating a cross section taken along C-C in FIG. 7.
FIG. 9 is a view illustrating a cross section taken along D-D in FIG. 7.
FIG. 10 is a view illustrating a shape example of a reinforcing member.
FIG. 11 is a view illustrating a battery case according to a fourth embodiment of the present invention.
FIG. 12 is a view illustrating a cross section taken along E-E in FIG. 11.
FIG. 13 is a view illustrating a battery case according to a fifth embodiment of the present invention.
FIG. 14 is a view illustrating a cross section taken along F-F in FIG. 13.
FIG. 15 is a view illustrating a cross section taken along G-G in FIG. 13.
FIG. 16 is a view illustrating a cross section taken along H-H in FIG. 13.
FIG. 17 is a view illustrating a cross section taken along I-I in FIG. 13.
FIG. 18 is a view illustrating an example of disposing a reinforcing member under an impact absorbing member.
FIG. 19 is a view illustrating a battery case according to a sixth embodiment of the present invention.
FIG. 20 is a view of an impact absorbing member in FIG. 19 being seen from above.
FIG. 21 is views illustrating analysis models of a simulation (1).
FIG. 22 is a view for explaining a collision analysis condition.
FIG. 23 is a view for explaining a rigidity analysis condition.
FIG. 24 is views illustrating deformed states of the models in a collision analysis.
FIG. 25 is graphs summarizing results of the simulation (1).
FIG. 26 is views illustrating analysis models of a simulation (2).
FIG. 27 is graphs summarizing results of the simulation (2).

### EMBODIMENTS FOR CARRYING OUT INVENTION

Hereinafter, one embodiment of the present invention will be described while referring to the drawings. Note that in the present description and the drawings, elements having substantially the same functional configurations are denoted by the same codes to omit overlapped explanation.

### <First embodiment>

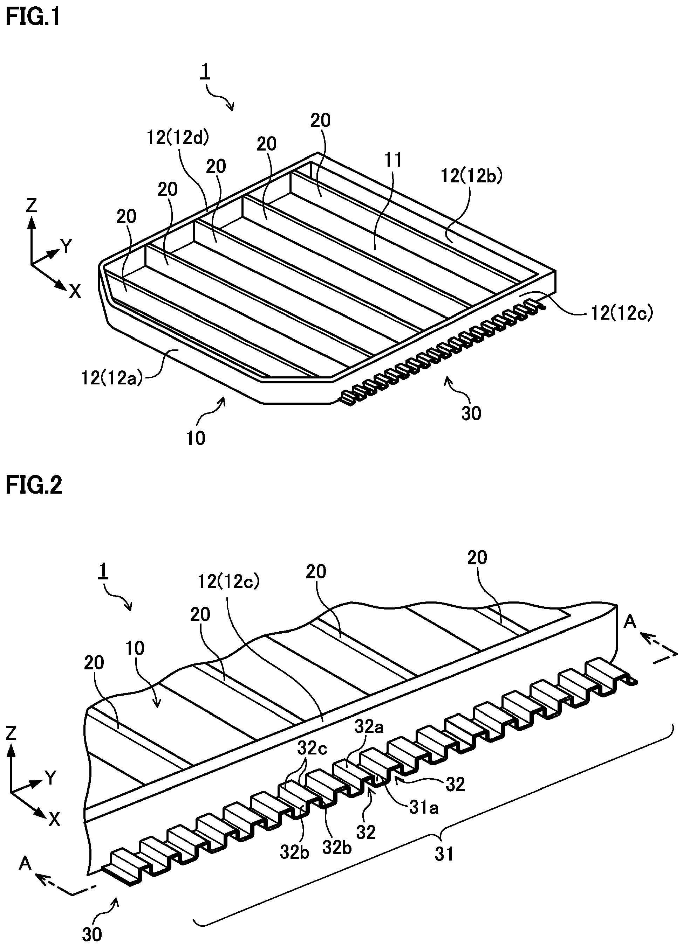

FIG. 1 is a view illustrating a schematic configuration of a battery case 1 of an automobile according to a first embodiment of the present invention. The battery case 1 of this embodiment is disposed under a floor panel of an electric vehicle, and thus an X direction in the figure is a vehicle width direction, a Y direction is a vehicle length direction, and a Z direction is a vehicle height direction. Note that a shape of the battery case 1, an installed position of the battery case 1 with respect to a vehicle body, and the like are different depending on a body layout, and thus the X direction is not necessarily the vehicle width direction, and the Y direction is not necessarily the vehicle length direction.

### (Configuration of battery case)

The battery case 1 includes a battery tray 10, a plurality of cross members 20, and an impact absorbing member 30.

The battery tray 10 has a bottom surface 11 and a plurality of side portions 12 surrounding the bottom surface 11. A shape of the battery tray 10 is not particularly limited, but appropriately changed depending on the installed position of the battery case 1 with respect to the vehicle body, the number of mounted battery cells (not illustrated), or the like. A material of the battery tray 10 is not particularly limited, and for example, a metallic material such as steel materials having tensile strengths of 440 to 1500 MPa or a metallic material such as an aluminum alloy member or a magnesium alloy member can be employed.

Note that the side portions 12 of the battery tray 10 may be constituted by a single part, or may be constituted by a plurality of parts such as a combination of an inner part and an outer part. For example, when the side portions 12 of the battery tray 10 are constituted by combining the inner part and the outer part, the "battery tray" in the present description indicates a structure including the outer part. Accordingly, "an outer side of the side portions 12 of the battery tray 10" in this case indicates an outer side of the outer part. Further, the bottom surface 11 and the side portions 12 of the battery tray 10 may be integrally molded.

In this embodiment, the two side portions 12 perpendicularly crossing the vehicle length direction (Y direction) and the two side portions 12 perpendicularly crossing the vehicle width direction (X direction) are present as the side portions 12 of the battery tray 10. Regarding these side portions 12, in this embodiment, for convenience of explanation, of the two side portions 12 perpendicularly crossing the vehicle length direction (Y direction), the side portion 12 positioned on the lower left side on the paper surface of FIG. 1 is referred to as a " front frame 12a" and the side portion 12 positioned on the upper right side thereon is referred to as a "rear frame 12b". Further, the two side portions 12 perpendicularly crossing the vehicle width direction (X direction) are referred to as a "first side frame 12c" and a "second side frame 12d". Further, the first side frame 12c and the second side frame 12d are sometimes collectively referred to as the "side frames 12c, 12d".

The following explanation of the embodiment is sometimes described with a "longitudinal direction of the first side frame 12c" and a "direction perpendicular to the first side frame 12c". As previously described, the first side frame 12c is one of the side portions 12 of the battery tray 10, which also allows the above-described "longitudinal direction of the first side frame 12c" to be reworded as a "longitudinal direction of the side portion 12". Further, the above-described "direction perpendicular to the first side frame 12c" can also be reworded as a "direction perpendicular to the side portion 12".

The front frame 12a and the rear frame 12b face each other, and the first side frame 12c and the second side frame 12d face each other. In this embodiment, the front frame 12a and the rear frame 12b are parallel to each other, and the first side frame 12c and the second side frame 12b are parallel to each other. Further, the front frame 12a and the rear frame 12b each extend in a direction from the second side frame 12d toward the first side frame 12c.

The cross member 20 is a member extending in the direction from the second side frame 12d toward the first side frame 12c. The cross member 20 of this embodiment extends in the direction perpendicular to the first side frame 12c (X direction), and both respective end portions of the cross member 20 in the X direction are connected to the side frames 12c, 12d.

A plurality of such cross members 20 are arranged at intervals along the longitudinal direction of the first side frame 12c (Y direction), and each of the cross members 20 is fixed to at least any one of the bottom surface **11** and the side portions 12 of the battery tray 10 by a joining means such as welding. A material of the cross member 20 is not particularly limited, and for example, the metallic material such as the steel materials having tensile strengths of 440 to 1500 MPa or the metallic material such as the aluminum alloy member or the magnesium alloy member can be employed.

A space in the battery tray 10 is divided into a plurality of areas by arranging the cross members 20 at intervals. When the battery case 1 is installed in the vehicle body, the battery cells (not illustrated) are mounted in the divided areas in the battery tray 10, and the battery case 1 is installed in the vehicle body in a state of being covered with a case cover (not illustrated).

The impact absorbing member 30 is a member extending in the longitudinal direction of the first side frame 12c (Y direction), and has a function of absorbing collision energy by its own plastic deformation at collision time. A detailed explanation of a shape of the impact absorbing member 30 will be described later.

A length L₀ of the impact absorbing member 30 in the longitudinal direction of the first side frame 12c (Y direction) is appropriately changed depending on the shape of the battery tray 10, required energy absorption performance, or the like. Further, a length of the impact absorbing member 30 in the direction perpendicular to the first side frame 12c (X direction) is appropriately changed depending on the shape of the battery case 1, the required energy absorption performance, or the like, and is preferably 50 mm or more. A material of the impact absorbing member 30 is not particularly limited, and for example, the metallic material such as the steel materials having tensile strengths of 440 to 1500 MPa or the metallic material such as the aluminum alloy member or the magnesium alloy member can be employed.

The impact absorbing member 30 of this embodiment is joined to an outer side of the first side frame 12c. Note that although illustration is omitted, the impact absorbing member 30 is also joined to an outer side of the second side frame 12d Further, in the battery case 1 of this embodiment, the impact absorbing members 30 are joined to the side frames to handle side collision of an automobile, and depending on the shape of the battery case 1, the installed position of the battery case 1 with respect to the vehicle body, or the like, the impact absorbing member 30 may be joined to the front frame 12a or the rear frame 12b of the battery tray 10 to handle frontal collision or handle rear collision.

When the impact absorbing member 30 is joined to the front frame 12a or the rear frame 12b of the battery tray 10, an extending direction of the impact absorbing member 30 is the X direction. As previously described, the front frame 12a and the rear frame 12b of the battery tray 10 are each one side of the side portions 12 of the battery tray 10, and thus also when the impact absorbing member 30 is disposed on the front frame 12a or the rear frame 12b, the extending direction of the impact absorbing member 30 is the same as a longitudinal direction of the side portion 12 of the battery tray 10.

Note that the first side frame 12c in this embodiment is the side portion 12, of the plurality of side portions 12 of the battery tray 10, to which the impact absorbing member 30 is joined. This allows the "longitudinal direction of the first side frame 12c" to be reworded as a "longitudinal direction of the side portion 12 to which the impact absorbing member 30 is joined". Further, the "direction perpendicular to the first side frame 12c" can be reworded as a "direction perpendicular to the side portion 12 to which the impact absorbing member 30 is joined".

The impact absorbing member 30 of this embodiment also functions as a bracket for fixing the battery tray 10 and a vehicle body side structural member (for example, a side sill) to each other. For this embodiment, by fixing the impact absorbing member 30 and the side sill to each other with a bolt with the side sill (not illustrated) in contact with an upper surface of the impact absorbing member 30, the battery tray 10 is fixed to the vehicle body side structural member. The bracket for fixing the battery tray 10 and the vehicle body side structural member to each other may be provided separately from the impact absorbing member 30, but from the viewpoint of reduction in weight, the impact absorbing member 30 preferably has a structure also functioning as the bracket as in this embodiment.

The schematic configuration of the battery case 1 of this embodiment is as described above. Note that a battery case of a hybrid car is not as large as that of the electric vehicle, and in the viewpoint of absorbing the collision energy, the battery case 1 is also applicable as the battery case of the hybrid car. Further, without being limited to the electric vehicle and the hybrid car, the automobile provided with the battery case having the battery tray 10 and the cross members 20 can improve energy absorption performance at collision time by applying the battery case 1.

### (Shape of impact absorbing member)

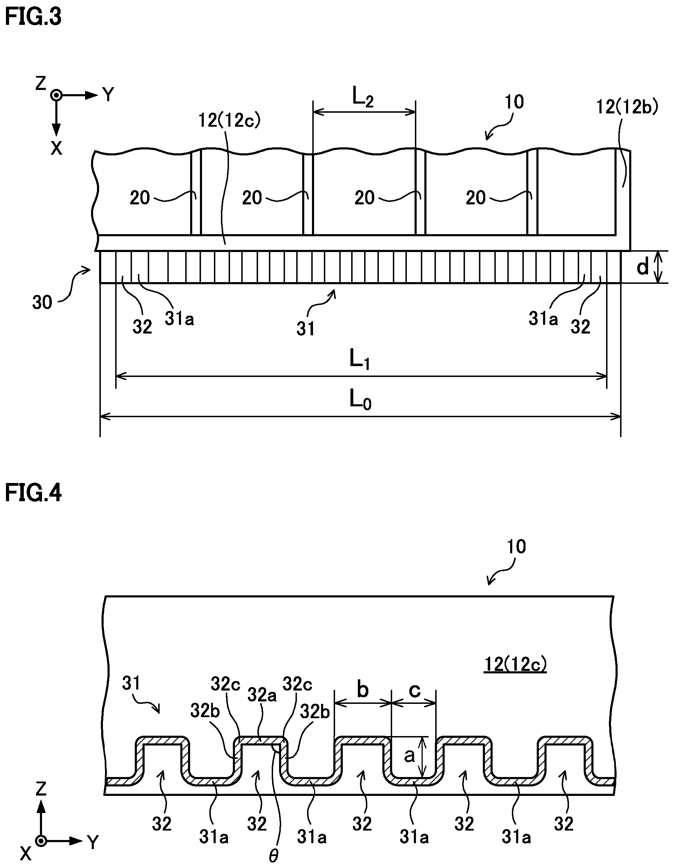

A shape of the impact absorbing member 30 will be described referring to FIG. 2 to FIG. 4. FIG. 2 is an enlarged view of the impact absorbing member 30 in FIG. 1, FIG. 3 is a view of the impact absorbing member 30 being seen from above, and FIG. 4 is a view illustrating a cross section taken along A-A in FIG. 2, that is, a cross section perpendicular to the Y direction, and illustrates a cross section perpendicular to ridge lines 32c of a later described convex portion 32.

The impact absorbing member 30 has a corrugated portion 31, and the corrugated portion 31 has a plurality of bottom surfaces 31a and a plurality of convex portions 32.

The bottom surface 31a of the corrugated portion 31 is positioned between the respective convex portions 32. The convex portion 32 of the corrugated portion 31 has a top surface 32a, two side surfaces 32b, and two ridge lines 32c. The two side surfaces 32b of the convex portion 32 face each other, and the top surface 32a of the convex portion 32 is positioned between the two side surfaces 32b.

In the corrugated portion 31, from the viewpoint of effectively improving the energy absorption performance, an angle θ made by the top surface 32a and the side surface 32b of the convex portion 32 is preferably 90 to 95 degrees. The angle θ within these numerical values reduces a length of the side surface 32b from the bottom surface 31a to the top surface 32a of the corrugated portion 31 to enhance surface rigidity of the side surface 32b. Further, the angle θ, made by the top surface 32a and the side surface 32b, ranging from 90 to 95 degrees also increases deformation resistance of the ridge line 32c as compared with an angle θ of, for example, 100 degrees or more. The improvement in the surface rigidity of the side surface 32b and the improvement in the deformation resistance of the ridge line 32c as described above enable an increase in deformation resistance to a collision load as all the convex portions.

In addition to this, the angle θ ranging from 90 to 95 degrees easily induces deformation in an axial crash mode at the time when the collision load is input. The axial crush mode is a deformation mode in which the convex portions 32 are crushed at short intervals to deform all the convex portions to a bellows shape when the collision load is input from the X direction. A larger plastic deformation area of the material can be secured by deforming all the convex portions to the bellows shape in this manner, which enables an increase in the energy absorption performance.

The two ridge lines 32c of the convex portion 32 are ridge lines connecting the top surface 32a and the two side surfaces 32b, and these ridge lines 32c extend in the direction from the second side frame 12d toward the first side frame 12c. In other words, the respective ridge lines 32c extend in the direction perpendicular to the first side frame 12c (X direction).

A height a of the convex portion 32 illustrated in FIG. 4 is a length from the bottom surface 31a to the top surface 32a in the vehicle height direction (Z direction), a width b of the convex portion 32 is a distance between the two side surfaces 32b of the one convex portion 32, and an interval c between the convex portions 32 is an interval from the side surface 32b of the one convex portion 32 to the side surface 32b of the adjacent convex portion 32. Further, a length d of the convex portion 32 illustrated in FIG. 3 is a length from one end to the other end of the convex portion 32 in an extending direction of the ridge lines 32c (X direction).

In the viewpoint of effectively improving the energy absorption performance, it is preferable that the height a of the convex portion 32 is 20 to 30 mm, the width b of the convex portion 32 is 20 to 30 mm, and the interval c between the convex portions 32 is 40 mm or less. However, a deformation mode in which a collapse of the surfaces of the convex portion 32 is likely to occur at collision time is not limited to this, and the larger height a or the narrower interval c is sometimes preferred, and thus dimensions are preferably appropriately designed depending on deformation modes.

Meanwhile, in a case where the height a of the convex portion 32, the width b of the convex portion 32, and the length d of the convex portion 32 (FIG. 3) satisfy the relations of 0.2 ≤ a/d ≤ 0.3 and 0.2 ≤ b/d ≤ 0.3, the deformation mode can be controlled to not the mode in which the collapse occurs but the axial crush mode. Thus, high energy absorption performance can be exhibited.

The above-described bottom surfaces 31a and convex portions 32 are alternatively present along the longitudinal direction of the first side frame 12c (Y direction) to thereby constitute the corrugated portion 31. A forming method of the corrugated portion 31 is not particularly limited, and for example, it is formed by press working on a plate material. The corrugated portion 31 of this embodiment is formed over the entire area in the longitudinal direction of the first side frame 12c, but may be formed in only a part of the area. However, from the viewpoint of distributing the collision load to the plurality of cross members 20 to improve the energy absorption performance, a formation range L₁ of the corrugated portion 31 (a length from the side surface 32b of the initial convex portion 32 to the side surface 32b of the last convex portion 32 on the Y direction) is required to be at least longer than an interval L₂ between the two cross members 20.

The battery case 1 is constituted as described above. In manufacturing the battery case 1 in this embodiment, for example, an upper face side of the top surfaces 32a at one end portion of both end portions of the top surfaces 32a in the extending direction of the ridge lines 32c (FIG. 2) (X direction) and the outer side of the first side frame 12c are subjected to arc welding (fillet welding). Moreover, a lower face side of the bottom surfaces 31a at an end portion, on the joint side of the top surfaces 32a and the first side frame 12c, of both end portions of the bottom surfaces 31a in the extending direction of the ridge lines 32c, and, the outer side of the first side frame 12c are subjected to the arc welding (fillet welding) to manufacture the battery case 1. Note that the method for manufacturing the battery case 1 is not limited to this method.

Next, the reason why the energy absorption performance improves by using the battery case 1 of this embodiment will be described. First, a conventional battery case is constituted by arranging a plurality of brackets for fixing a first side frame 12c and a vehicle body side structural member to each other at intervals along a longitudinal direction of the first side frame 12c as in Patent Document 2. For this configuration, even though the collision load is input to one bracket of the plurality of brackets, the collision load is not input to other brackets.

Further, in such a conventional battery case, a cross member 20, to which the collision load is transmitted, of a plurality of the cross members 20 is only the cross member 20 closest to the bracket to which the collision load is input, and the collision load is not input to the other cross members 20. In addition to this, for example, for a flat plate-shaped bracket not formed with a corrugated portion 31, the input of the collision load to an impact absorbing member 30 easily causes an out-of-plane deformation in the vehicle height direction. The occurrence of such an out-of-plane deformation leaves most of the portion undergoing no plastic deformation in the impact absorbing member 30, which prevents properties of the material from being fully used.

On the other hand, in the battery case 1 of this embodiment, the impact absorbing member 30 continuously extends along the longitudinal direction of the first side frame 12c (Y direction), and the corrugated portion 31 of the impact absorbing member 30 is formed in at least a longer range than an interval between the two cross members 20. This subjects the material at a collision point to binding force from the surrounding material at collision time, resulting in exerting force inhibiting the out-of-plane deformation at the collision point, and at the same time, inputting the load to the plurality of cross members 20.

In particular, in the impact absorbing member 30 of this embodiment, the corrugated portion 31 in which the ridge lines 32c are disposed in parallel to the direction from the second side frame 12d toward the first side frame 12c is formed, which increases deformation resistance to axial compression bending of the impact absorbing member 30 due to the collision load. Moreover, providing the corrugated portion 31 reduces a length of the surfaces connecting the ridge line and the ridge line (the bottom surface 31a, the top surface 32a and the side surfaces 32b of the convex portion 32) to cause larger surface rigidity than that of a flat shaped bracket. This restrains the out-of-plane deformation of the respective surfaces.

In the battery case 1 of this embodiment, such restraint action on the out-of-plane deformation as described above allows further restraint on the out-of-plane deformation of the impact absorbing member 30 at collision time than conventional ones, which enables the securing of the larger plastic deformation area. This enables the improvement in energy absorption performance. Further, the impact absorbing member 30 has the corrugated portion 31, thereby allowing an increase in the second moment of area of the impact absorbing member 30, resulting in enabling an improvement in attachment rigidity of the impact absorbing member 30. That is, rigidity around a fixed portion of the impact absorbing member 30 and the vehicle body side structural member can be improved, resulting in also enabling an improvement in rigidity as the vehicle body.

### <Second embodiment>

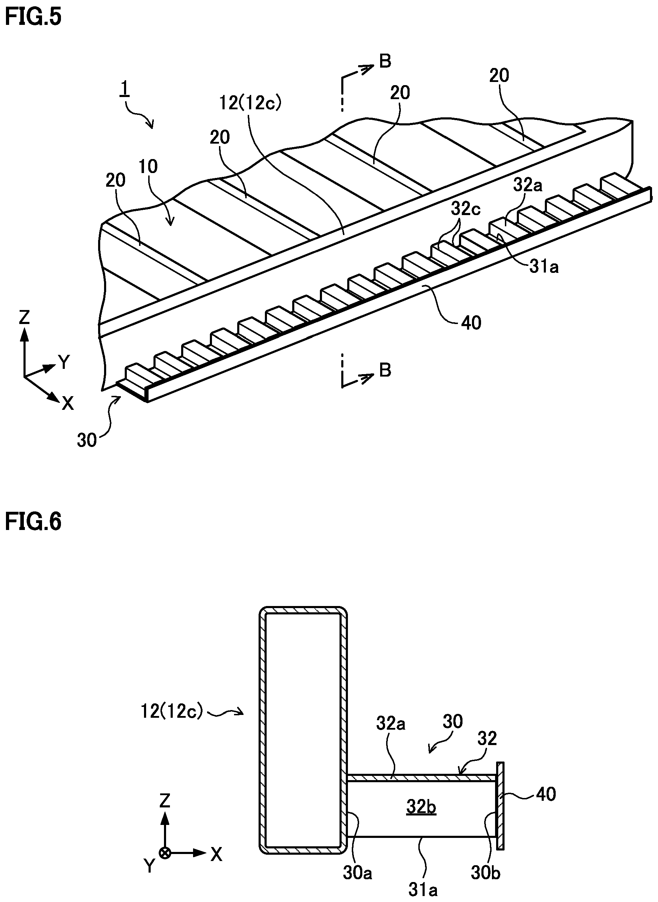

Next, a battery case 1 of a second embodiment will be described referring to FIG. 5 and FIG. 6. FIG. 6 is a view illustrating a cross section taken along B-B in FIG. 5, and illustrates a cross section, perpendicular to a Y direction, including a convex portion 32 of a corrugated portion 31.

The battery case 1 of this embodiment further includes a reinforcing member 40 with respect to the battery case 1 of the first embodiment. The reinforcing member 40 is a member extending along a longitudinal direction of a first side frame 12c (Y direction). A length of the reinforcing member 40 in a vehicle height direction (Z direction) is preferably at least equal to or more than a length from a bottom surface 31a to a top surface 32a of an impact absorbing member 30 in the vehicle height direction from the viewpoints of effectively improving energy absorption performance and securing ease of joining the impact absorbing member 30 and the reinforcing member 40. A material of the reinforcing member 40 is not particularly limited, and for example, a metallic material such as steel materials having tensile strengths of 440 to 1500 MPa or a metallic material such as an aluminum alloy member or a magnesium alloy member can be employed.

The reinforcing member 40 is joined to an end face portion 30b opposite to an end face portion 30a that is joined to a battery tray 10 in the impact absorbing member 30. In other words, the reinforcing member 40 is joined to the end face portion 30b on a vehicle-exterior side of the impact absorbing member 30 in a vehicle width direction (X direction). Note that a concrete method of joining the impact absorbing member 30 and the reinforcing member 40 is not particularly limited. As one example, first, an upper face side of the top surfaces 32a at one end portion of both end portions of the top surfaces 32a in an extending direction of ridge lines 32c (FIG. 5) and the reinforcing member 40 are subjected to arc welding (fillet welding). Moreover, a lower face side of the bottom surfaces 31a at an end portion, on the joint side of the top surfaces 32a and the reinforcing member 40, of both end portions of the bottom surfaces 31a in the extending direction of the ridge lines 32c, and, the reinforcing member 40 are subjected to the arc welding (fillet welding).

In the battery case 1 of this embodiment, the reinforcing member 40 connects the convex portions 32 of the impact absorbing member 30, thereby easily transmitting an input collision load to portions other than a collision point via the reinforcing member 40. Further, the reinforcing member 40 strengthens the binding on the impact absorbing member 30 in the longitudinal direction of the first side frame 12c (Y direction), and thereby a portion, not subjected to an out-of-plane deformation, except for the collision point acts so as to inhibit the out-of-plane deformation at the collision point. This allows restraint on the out-of-plane deformation as compared with a case where the reinforcing member 40 is not provided, which enables a further improvement in energy absorption performance.

A length of the reinforcing member 40 in the longitudinal direction of the first side frame 12c (Y direction) is not particularly limited, and in the viewpoint of obtaining the above-described effect regardless of the collision position, the length of the reinforcing member 40 in the longitudinal direction of the first side frame 12c is preferably 90% or more of the length L₁ of the corrugated portion 31 of the impact absorbing member 30 (FIG. 3). Note that the reinforcing member 40 of this embodiment is a flat plate, and a shape of the reinforcing member 40 is not particularly limited.

### <Third embodiment>

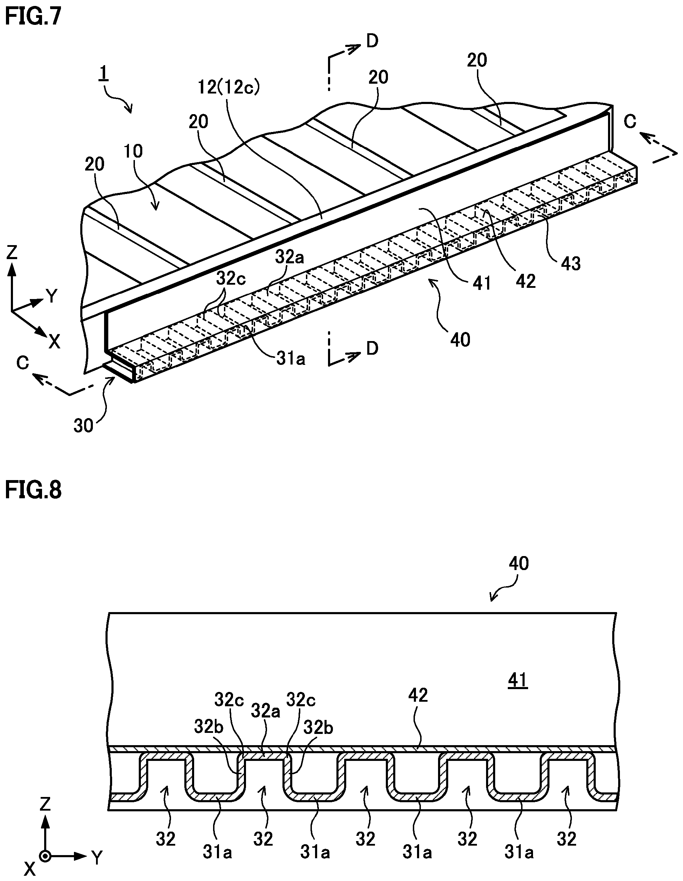

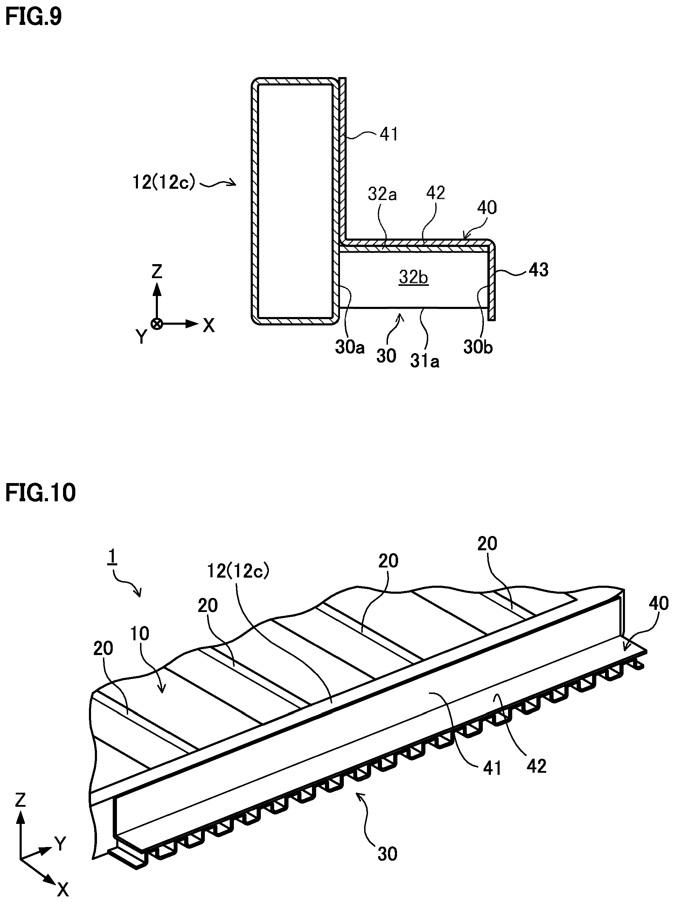

Next, a battery case 1 of a third embodiment will be described referring to FIG. 7 to FIG. 9. FIG. 8 is a view illustrating a cross section taken along C-C in FIG. 7, and illustrates a cross section perpendicular to an X direction. FIG. 9 is a view illustrating a cross section taken along D-D in FIG. 7, and illustrates a cross section perpendicular to a Y direction.

The battery case 1 of this embodiment further includes a reinforcing member 40 with respect to the battery case 1 of the first embodiment. The reinforcing member 40 of this embodiment is a member extending along a longitudinal direction of a first side frame 12c (Y direction). A material of the reinforcing member 40 is not particularly limited, and for example, a metallic material such as steel materials having tensile strengths of 440 to 1500 MPa or a metallic material such as an aluminum alloy member or a magnesium alloy member can be employed.

The reinforcing member 40 includes a first face 41, a second face 42, and a third face 43. A length of the third face 43 in a vehicle height direction (Z direction) is preferably at least equal to or more than a length from a bottom surface 31a to a top surface 32a of an impact absorbing member 30 in the vehicle height direction from the viewpoints of effectively improving energy absorption performance and securing ease of joining the impact absorbing member 30 and the reinforcing member 40.

The first face 41 is joined to an outer side of the first side frame 12c. The second face 42 is connected to the first face 41, and joined to the top surfaces 32a of convex portions 32 of the impact absorbing member 30. The third face 43 is connected to an end portion opposite to an end portion on a connection side of the second face 42 to the first face 41. In other words, the third face 43 is connected to a vehicle-exterior end portion of the second face 42 in a vehicle width direction (X direction). Further, the third face 43 is joined to an end face portion 30b opposite to an end face portion 30a that is joined to the first side frame 12c in the impact absorbing member 30.

A concrete method of joining a battery tray 10, the impact absorbing member 30, and the reinforcing member 40 is not particularly limited, and the battery case 1 according to this embodiment is manufactured by joining the members in the following method, for example.

First, an upper face side of the top surfaces 32a at one end portion of both end portions of the top surfaces 32a in an extending direction of ridge lines 32c of the impact absorbing member 30 (FIG. 7) and the outer side of the first side frame 12c are subjected to arc welding (fillet welding).

Next, the first face 41 of the reinforcing member 40 and the first side frame 12c overlap each other, and the first face 41 and the first side frame 12c are subjected to the arc welding (lap welding) with slits (not illustrated), formed in the first face 41 in advance, therebetween. Next, the top surfaces 32a of the impact absorbing member 30 and the second face 42 of the reinforcing member 40 are subjected to spot welding. Note that in place of this spot welding, for example, slits (not illustrated) may be formed in the second face 42 in advance to subject the top surfaces 32a and the second face 42 to the arc welding (lap welding) with the slits therebetween.

Next, a lower face side of the bottom surfaces 31a of the impact absorbing member 30 and the third face 43 of the reinforcing member 40 are subjected to the arc welding (fillet welding).

Finally, a lower face side of the bottom surfaces 31a at an end portion, on the joint side of the top surfaces 32a and the first side frame 12c, of both end portions of the bottom surfaces 31a in the extending direction of the ridge lines 32c of the impact absorbing member 30, and, the outer side of the first side frame 12c are subjected to the arc welding (fillet welding).

Note that the reinforcing member 40 having the first face 41, the second face 42, and the third face 43 is integrally molded in this embodiment, and for example, the reinforcing member 40 of this embodiment may be constituted by combining the flat plate as in FIG. 5 with an L-shape bracket having the first face 41 and the second face 42.

In the battery case 1 of this embodiment, the reinforcing member 40 connects the convex portions 32 of the impact absorbing member 30 similarly to the second embodiment, thereby easily transmitting a collision load to portions other than a collision point via the reinforcing member 40. In the battery case 1 of this embodiment in particular, the reinforcing member 40 connects not only the end face portion 30b of the impact absorbing member 30 on a vehicle-exterior side in the vehicle width direction but also the top surfaces 32a of the convex portions 32 of the impact absorbing member 30, thereby further strengthening binding on the impact absorbing member 30 in the longitudinal direction of the first side frame 12c (Y direction) than the case of the second embodiment. This further enhances an effect of restraining the out-of-plane deformation of the impact absorbing member 30, which enables an improvement in energy absorption performance.

A length of the reinforcing member 40 in the longitudinal direction of the first side frame 12c (Y direction) is not particularly limited, and in the viewpoint of obtaining the above-described effect regardless of the collision position, the length of the reinforcing member 40 in the longitudinal direction of the first side frame 12c is preferably 90% or more of the length L₁ of the corrugated portion 31 of the impact absorbing member 30 (FIG. 3).

Note that the reinforcing member 40 need not have the third face 43 as illustrated in FIG. 10. The reinforcing member 40 is formed in an L-shape in an example in FIG. 10. The effect of restraining the out-of-plane deformation of the impact absorbing member 30 can also be obtained in this case. In particular, to effectively restrain the out-of-plane deformation of the impact absorbing member 30, the top surfaces 32a of the adjacent convex portions 32 of the impact absorbing member 30 are preferably connected to each other, and thus even though the reinforcing member 40 does not have the third face 43 as in FIG. 10, the energy absorption performance can be improved.

### <Fourth embodiment>

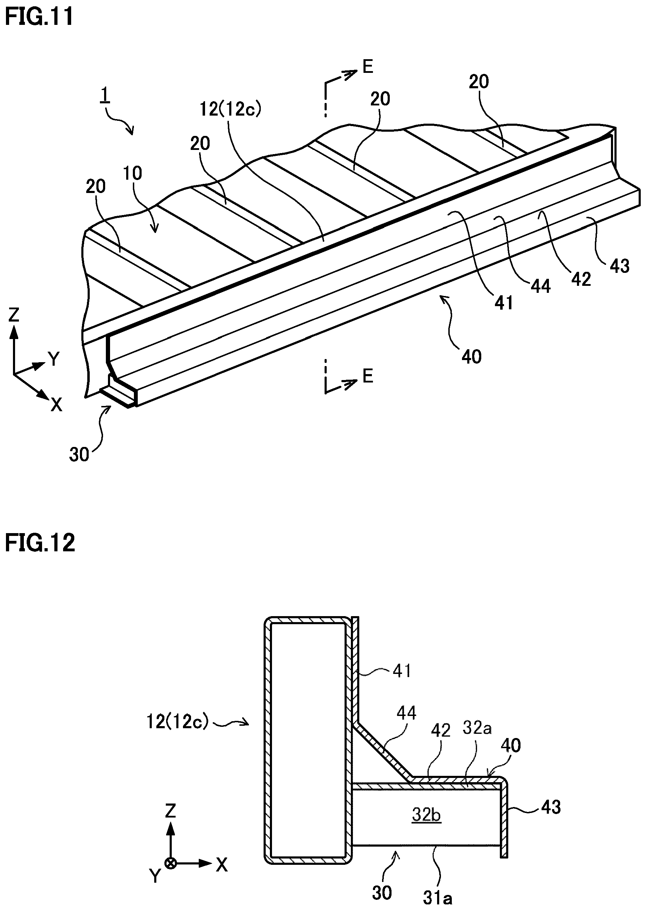

Next, a battery case 1 of a fourth embodiment will be described referring to FIG. 11 and FIG. 12. FIG. 12 is a view illustrating a cross section taken along E-E in FIG. 11, and illustrates a cross section, perpendicular to a Y direction, including a convex portion 32 of an impact absorbing member 30.

The battery case 1 of this embodiment is provided with a slope 44 between the first face 41 and the second face 42 of the reinforcing member 40 in the third embodiment. When the reinforcing member 40 has the slope 44, the slope 44 functions so as to be a support member supporting the second face 42, which allows obtaining of an effect of restraining an out-of-plane deformation of the second face 42. Allowing the restraint on the out-of-plane deformation of the second face 42 also allows restraint on an out-of-plane deformation of top surfaces 32a of convex portions 32 of an impact absorbing member 30, which enables an improvement in energy absorption performance. Further, when the reinforcing member 40 has the slope 44, the second moment of area also increases, which also increases rigidity in a vehicle height direction of the impact absorbing member 30 (Z direction).

### <Fifth embodiment>

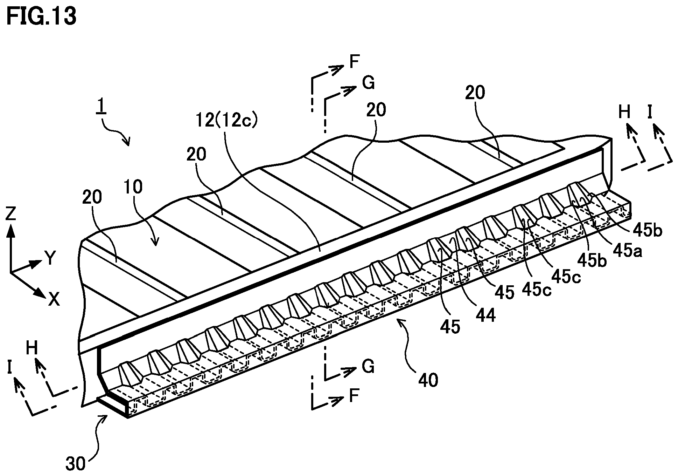

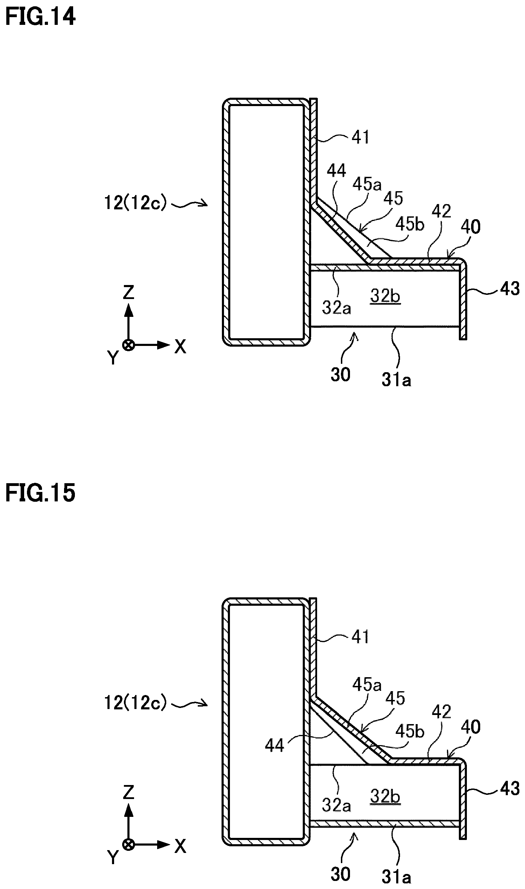

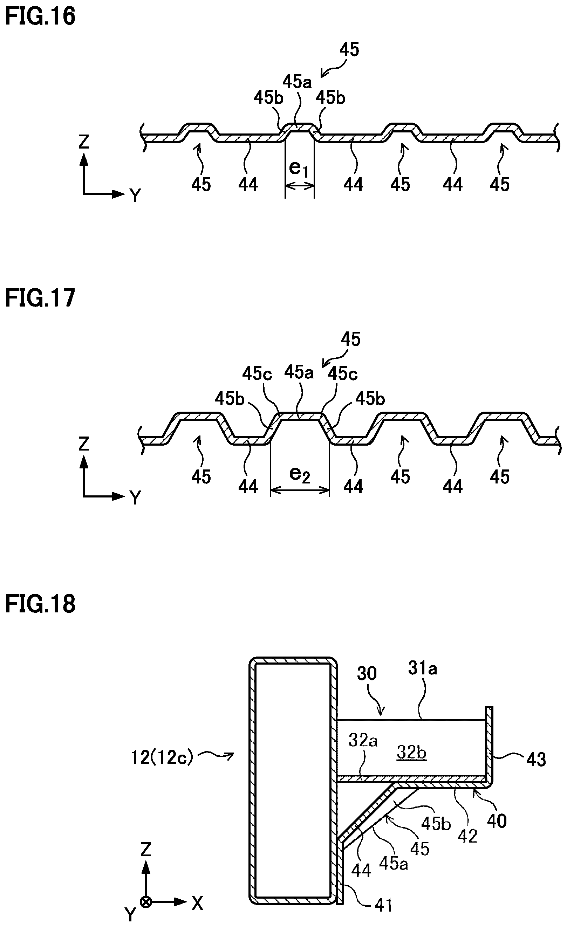

Next, a battery case 1 of a fifth embodiment will be described referring to FIG. 13 to FIG. 17. FIG. 14 is a view illustrating a cross section taken along F-F in FIG. 13, and illustrates a cross section, perpendicular to a Y direction, including a convex portion 32 of an impact absorbing member 30. FIG. 15 is a view illustrating a cross section taken along G-G in FIG. 13, and illustrates a cross section, perpendicular to the Y direction, including a bottom surface 31a of the impact absorbing member 30. FIG. 16 is a view illustrating a cross section taken along H-H in FIG. 13, and illustrates a cross section perpendicular to the slope 44. The slope 44 in the vicinity of a first face 41 of the reinforcing member 40 is cut to be included in FIG. 16 FIG. 17 is a view illustrating a cross section taken along I-I in FIG. 13, and illustrates a cross section perpendicular to the slope 44. The slope 44 in the vicinity of a second face 42 of the reinforcing member 40 is cut to be included in FIG. 17.

The battery case 1 of this embodiment includes a plurality of ribs 45 on the slope 44 of the reinforcing member 40 of the fourth embodiment. The rib 45 has a top surface 45a, two side surfaces 45b, and two ridge lines 45c.

The top surface 45a of the rib 45 is positioned on a further outer side of a battery tray 10 than the slope 44 of the reinforcing member 40. In other words, the top surface 45a of the rib 45 is positioned further apart from the battery tray 10 than the slope 44 of the reinforcing member 40. The two side surfaces 45b of the rib 45 face each other. The two ridge lines 45c of the rib 45 are ridge lines connecting the top surface 45a and the two side surfaces 45b, and extend from a first face 41 toward a second face 42. A plurality of such ribs 45 are provided along a longitudinal direction of a first side frame 12c (Y direction), and the slope 44 is positioned between the two ribs 45.

In the rib 45 of this embodiment, as illustrated in FIG. 16 and FIG. 17, an interval e₂ between the two side surfaces 45b in the vicinity of the second face 42 is larger than an interval e₁ between the two side surfaces 45b in the vicinity of the first face 41. The interval between the two side surfaces 45b of the rib 45 (rib widths) is not particularly limited, and the interval between the two side surfaces 45b preferably increases from the first face 41 side toward the second face 42 side as in this embodiment. A height of the rib 45 is not particularly limited, but appropriately changed depending on a shape of the entire reinforcing member 40, the required energy absorption performance, or the like.

When the ribs 45 are provided on the slope 44 of the reinforcing member 40 as in this embodiment, bending rigidity of the reinforcing member 40 greatly improves, which restrains an out-of-plane deformation of the second face 42 of the reinforcing member 40. Accordingly, an out-of-plane deformation of the impact absorbing member 30 in a vehicle height direction (Z direction) can be restrained.

In particular, according to the reinforcing member 40 having the ribs 45 as in this embodiment, a high effect of restraining the out-of-plane deformation easily causes not the out-of-plane deformation but crushing deformation in a bellows shape at a collision point with the impact absorbing member 30. This greatly increases a plastic deformation area of the impact absorbing member 30 as compared with the case of causing the out-of-plane deformation, which enables a dramatic improvement in energy absorption performance. Further, when the reinforcing member 40 has the ribs 45, the second moment of area also increases, which also increases attachment rigidity of the impact absorbing member 30.

A forming position of the ribs 45 is not particularly limited, and the rib 45 is preferably provided on the slope portion corresponding to, of a forming point and a non-forming point of the convex portion 32 of the impact absorbing member 30, the non-forming point of the convex portion 32. That is, the convex portions 32 of the impact absorbing member 30 and the ribs 45 of the reinforcing member 40 are preferably alternately positioned along the longitudinal direction of the first side frame 12c (Y direction). This facilitates securing of a joint surface of the reinforcing member 40 having the ribs 45 and the impact absorbing member 30, which enables both ease of joining the reinforcing member 40 to the impact absorbing member 30 and energy absorption performance.

Note that when the convex portions 32 and the ribs 45 are alternately positioned as in this embodiment, the cross section, perpendicular to the Y direction, including the convex portion 32 of the impact absorbing member 30 (FIG. 14) does not include a cut surface of the rib 45, but the cross section, perpendicular to the Y direction, including the bottom surface 31a of the impact absorbing member 30 (FIG. 15) includes the cut surface of the rib 45.

Note that the reinforcing member 40 is provided over the impact absorbing member 30 in each of the third to fifth embodiments, and the reinforcing member 40 may be provided under the impact absorbing member 30 as in FIG. 18. Even in this case, deformation behavior similar to that in the above-described embodiments occurs at collision time, which enables the improvement in energy absorption performance.

Further, when the reinforcing member 40 is provided under the impact absorbing member 30, in the present description, "the bottom surface 31a of the corrugated portion 31" in the previously described embodiments is defined as "a top surface 32a of a convex portion 32", and "the top surface 32a of the convex portion 32" in the previously described embodiments is defined as "a bottom surface 31a of a corrugated portion 31". Accordingly, also when the reinforcing member 40 is provided under the impact absorbing member 30 as in FIG. 18, the second face 42 of the reinforcing member 40 is joined to the top surfaces 32a of the convex portions of the corrugated portion 31.

### <Sixth embodiment>

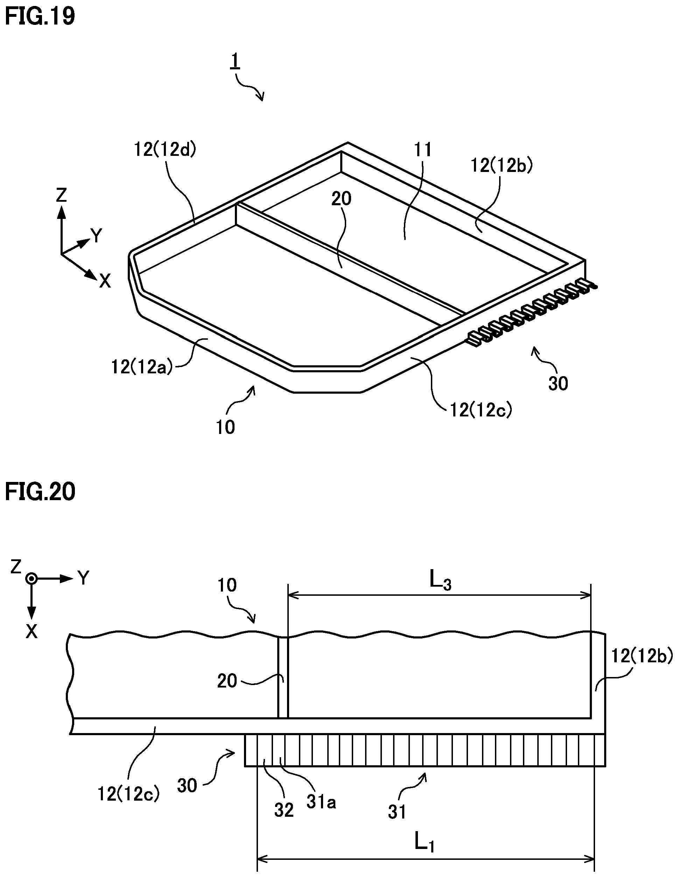

Next, a battery case 1 of a sixth embodiment will be described referring to FIG. 19 to FIG. 20. FIG. 20 is a view of an impact absorbing member 30 in FIG. 19 being seen from above.

The battery case 1 of each of the first to fifth embodiments includes the plurality of cross members 20, and a battery case 1 of the sixth embodiment includes only one cross member 20. The cross member 20 of this embodiment is disposed in a middle portion between a front frame 12a and a rear frame 12b.

The impact absorbing member 30 of this embodiment is provided in only an area of not the whole but a part of a first side frame 12c, and a formation range L₁ of a corrugated portion 31 is longer than an interval L₃ between the cross member 20 and the rear frame 12b. Note that in this embodiment, the corrugated portion 31 of the impact absorbing member 30 is formed in a range extending across the cross member 20 and the rear frame 12b, and may be formed in a range extending across the cross member 20 and the front frame 12a.

In the battery case 1 of this embodiment, forming the corrugated portion 31 of the impact absorbing member 30 in a longer range than the interval between the cross member 20 and the rear frame 12b allows a distribution of a collision load to the cross member 20 and the rear frame 12b. This enables an improvement in energy absorption performance. That is, the battery case 1 of this embodiment does not include the plurality of cross members 20 differently from the previously-described embodiments, but the rear frame 12b functions so as to be one cross member 20.

Here, in the present description, the cross member 20 and such a portion having the function equal to the cross member 20 described above are each defined as a "cross frame part". The cross frame part extends in a direction from a second side portion (for example, a second side frame 12d) toward a first side portion (for example, a first side frame 12c) (the X direction in the above-described embodiments). The cross frame part is connected to only a bottom surface 11 of a battery tray 10, connected to the first side portion and the second side portion, or connected to the bottom surface 11, the first side portion, and the second side portion. Further, the cross frame parts are arranged at intervals along a longitudinal direction of the side portion of the battery tray 10 to which the impact absorbing member 30 is joined (the first side frame 12c in the above-described embodiments).

In such cross frame parts, to distribute the collision load to the plurality of cross frame parts to improve the energy absorption performance, the corrugated portion 31 of the impact absorbing member 30 only needs to be formed in at least a longer range than the interval between the two cross frame parts.

For example, the cross frame parts of the battery case 1 illustrated in FIG. 1 are the five cross members 20, the front frame 12a, and the rear frame 12b. Further, the cross frame parts of the battery case 1 illustrated in FIG. 19 are the one cross member 20, the front frame 12a, and the rear frame 12b. In both of examples in FIG. 1 and FIG. 19, the plurality of cross frame parts are provided, and the corrugated portion 31 of the impact absorbing member 30 is formed in at least a longer range than the interval between the two cross frame parts.

Note that the first side portion may be the front frame 12a, for example. In this case, the second side portion is the rear frame 12b. Further, in the battery case 1 provided with a cross member extending from the front frame 12a to the rear frame 12b (not illustrated) in this case, this cross member, the first side frame 12c, and the second side frame 12d are cross frame parts.

For example, characteristics of the respective battery cases 1 described in the first to sixth embodiments can be combined with one another to the extent possible to be structurally combined.

### EXAMPLES

### <Simulation (1)>

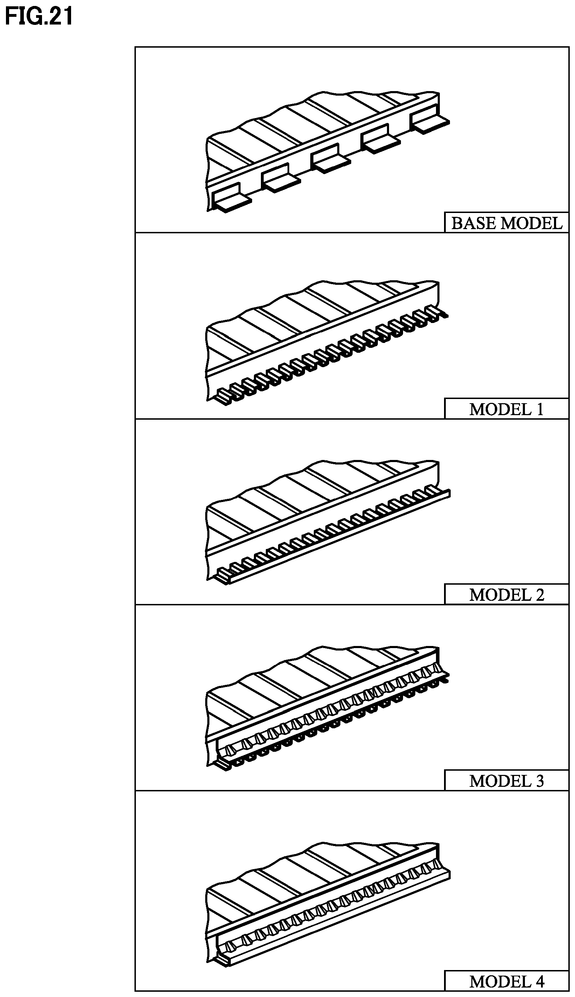

A collision analysis and a rigidity analysis were carried out by using models of battery cases illustrated in FIG. 21. Characteristics of the models are as follows. Note that a base model is a model as a comparative example with examples of the present invention, and models 1 to 4 are models as the examples of the present invention.

A base model: a plurality of L-shape brackets are arranged at intervals in a vehicle length direction. The two L-shape brackets are disposed vertically symmetrically at a joint of the brackets and a side frame, and the respective brackets are joined to the side frame.

A model 1: the model corresponding to the battery case in FIG. 2. A bracket as an impact absorbing member having a corrugated portion is joined to a side frame. No reinforcing member.

A model 2: the model corresponding to the battery case in FIG. 5. A reinforcing member is joined to an end face portion of the bracket of the model 1 on a vehicle-exterior side in a vehicle width direction.

A model 3: the model excluding the third face from the reinforcing member of the battery case in FIG. 13. An L-shape reinforcing member is joined to an upper surface of the bracket of the model 1. The reinforcing member has a slope and ribs.

A model 4: the model corresponding to the battery case in FIG. 13. A reinforcing member is joined to an end face portion on a vehicle-exterior side in a vehicle width direction and top surfaces of convex portions of the bracket of the model 1. The reinforcing member has a slope and ribs.

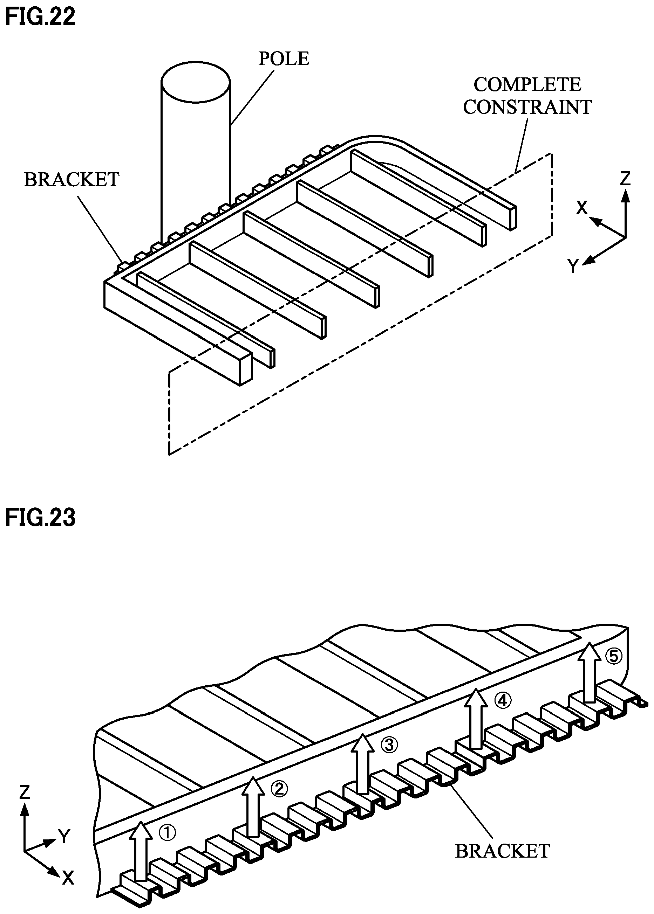

The collision analysis was carried out by bringing a pole with ϕ254 mm into contact with a bracket as illustrated in FIG. 22 to move the pole to the vehicle-interior side at a velocity of 1 m/s. A constraint surface is a surface perpendicular to a vehicle width direction (X direction), and placed at a middle portion in the vehicle width direction of a battery tray. In the collision analysis, an absorbed energy when the pole moved 85 mm and a mass efficiency of the absorbed energy (absorbed energy/mass of bracket) were calculated.

The rigidity analysis was carried out by imparting a 1 N upward force in the vehicle height direction to five points on the bracket illustrated in FIG. 23 by using an inertia relief method. In the rigidity analysis, a bracket rigidity of each of the models and a mass efficiency of the rigidity (rigidity/mass of bracket) were calculated. The bracket rigidity is indicated by an average value of the rigidity values of the points on each of which the load is imparted in FIG. 23.

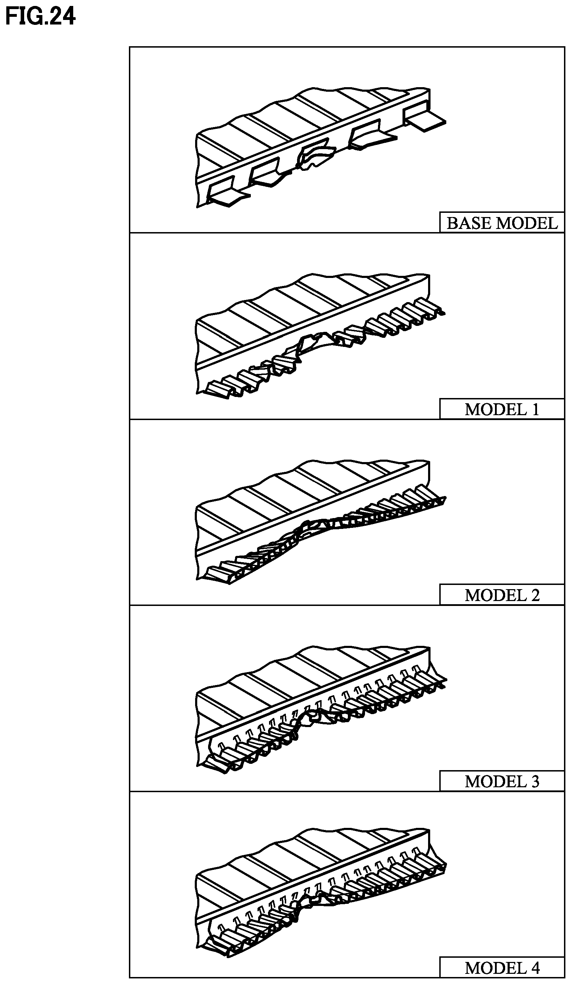

FIG. 24 illustrates deformed states of the brackets in the collision analysis. An out-of-plane deformation appeared at a contact point of the pole with the bracket of the base model. On the other hand, although an out-of-plane deformation also appeared at a contact point of the pole with the bracket of the model 1, a degree of the out-of-plane deformation was restrained more than the base model. Further, in observing a stress distribution of the model 1, a compressive stress was also generated in portions other than the contact point of the pole.

An out-of-plane deformation of the bracket of the model 2 was restrained much more than that of the model 1, and a compressive stress generated in portions other than a contact point of the pole also increased. Not an out-of-plane deformation but a crushing deformation in a bellows shape appeared at a contact point of the pole in the model 3.

A compressive stress was also generated in portions other than the contact point of the pole in the model 3, and the appearance of the crushing deformation at the contact point of the pole in the model 3 generated a large compressive stress at this point. Further, it was also able to be confirmed that compressive stresses generated in a plurality of cross members also increased in the bracket of the model 3, and a collision load distributed to the plurality of cross members was larger as compared with the models 1 to 2.

In the bracket of the model 4, a crushing deformation appeared at a collision point of the pole similarly to the model 3, and the generated compressive stress was also larger than that of the model 3.

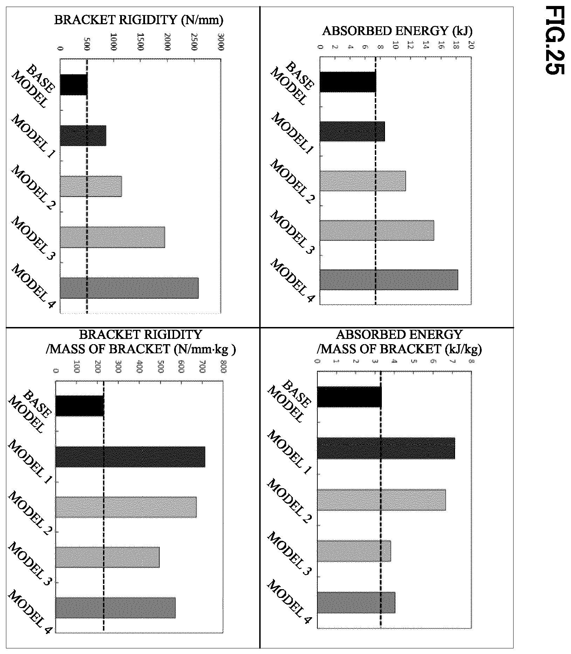

FIG. 25 illustrates collision analysis results and rigidity analysis results in the simulation (1). Any of the example models of the present invention (models 1 to 4) was larger in absorbed energy than the base model as illustrated in FIG. 25. In particular, the absorbed energy dramatically rises in the model 3 and the model 4 in each of which the crushing deformation in a bellows shape has appeared at the contact point of the pole.

On the other hand, the model 1 and the model 2 are each excellent in the mass efficiency of the absorbed energy. Thus, the model 1 and the model 2 can be said to be models suitable for a case of intending to give priority to reduction in weight while securing the energy absorption performance to some extent. The results of the bracket rigidity and the mass efficiency of the bracket rigidity in each of the models also indicated tendencies similar to the results of the absorbed energy and the mass efficiency of the absorbed energy.

### <Simulation (2)>

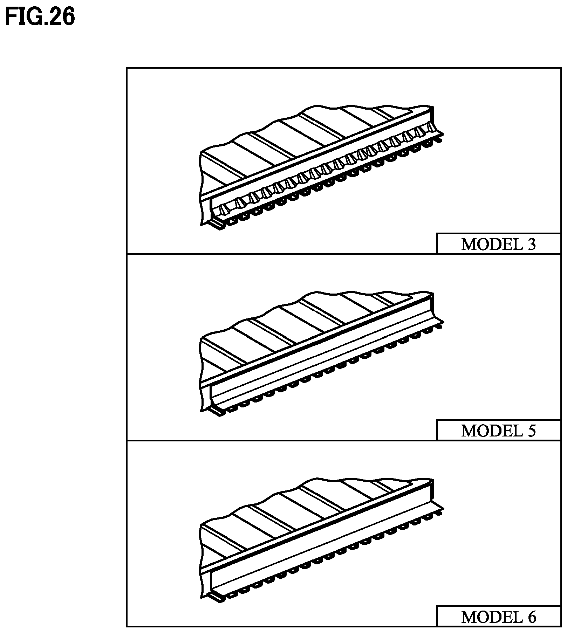

The collision analysis and the rigidity analysis were carried out by using models of battery cases illustrated in FIG. 26. A collision analysis condition and a rigidity analysis condition are the same as those of the simulation (1). Characteristics of the models are as follows.

### A model 3: the model 3 of the simulation (1)

A model 5: a model without providing with the ribs with respect to the model 3.

A model 6: a model without providing with the ribs and the slope with respect to the model 3.

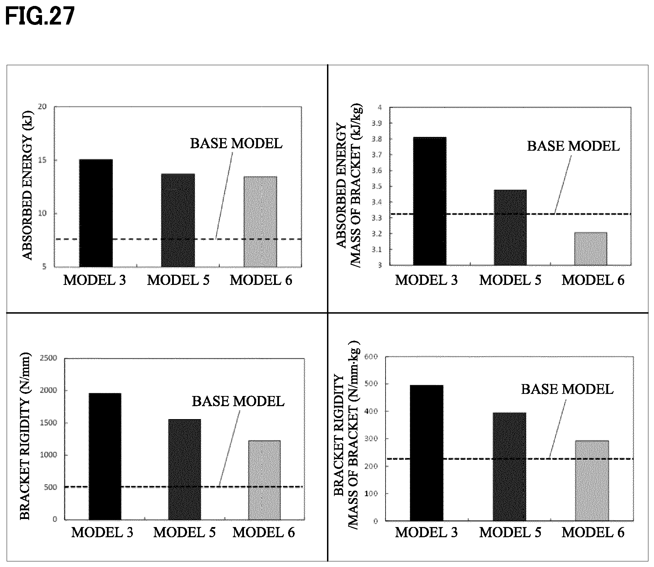

FIG. 27 illustrates collision analysis results and rigidity analysis results in the simulation (2). Any of the models improves the absorbed energy with respect to the base model as indicated by the results in FIG. 27. Further, the model 5 whose reinforcing member has the slope is larger in absorbed energy than the model 6 having no slope, and the model 3 having the ribs on the slope is larger in absorbed energy than the model 5 having no rib.

### INDUSTRIAL APPLICABILITY

The present invention can be used as a battery case of an automobile.

### EXPLANATION OF CODES

- 1: battery case
- 10: battery tray
- 11: bottom surface of battery tray
- 12: side portion of battery tray
- 12a: front frame
- 12b: rear frame
- 12c: first side frame
- 12d: second side frame
- 20: cross member
- 30: impact absorbing member
- 30a: end face portion
- 30b: end face portion
- 31: corrugated portion
- 31a: bottom surface of corrugated portion
- 32: convex portion
- 32a: top surface of convex portion
- 32b: side surface of convex portion
- 32c: ridge line of convex portion
- 40: reinforcing member
- 41: first face
- 42: second face
- 43: third face
- 44: slope
- 45: rib
- 45a: top surface of rib
- 45b: side surface of rib
- 45c: ridge line of rib
- a: height of convex portion
- b: width of convex portion
- c: interval between convex portions
- d: length of convex portion
- e₁: interval between two side surfaces of rib
- e₂: interval between two side surfaces of rib
- L₀: entire length of impact absorbing member
- L₁: formation range of corrugated portion
- L₂: interval between cross members
- L₃: interval between cross member and rear frame
- θ: angle made by top surface and side surface of convex portion

## Claims

1. A battery case (1) of an automobile, comprising:
a battery tray (10);
a plurality of cross frame parts (20, 12a, 12b); and
an impact absorbing member (30), wherein:
the battery tray (10) has a bottom surface (11), a first side portion (12c), and a second side portion (12d);
the first side portion (12c) and the second side portion (12d) face each other;
the plurality of cross frame parts (20, 12a, 12b) extend in a direction from the second side portion (12d) toward the first side portion (12c);
the plurality of cross frame parts (20, 12a, 12b) are arranged at intervals along a longitudinal direction of the first side portion (12c);
the impact absorbing member (30) is joined to an outer side of at least the first side portion (12c) of the first side portion (12c) and the second side portion (12d); and
the impact absorbing member (30) includes a corrugated portion (31), wherein:
the corrugated portion (31) is formed in at least a longer range than an interval between the two cross frame parts (20, 12a, 12b);
the corrugated portion (31) has a plurality of bottom surfaces (31a) and a plurality of convex portions (32);
the bottom surfaces (31a) of the corrugated portion (31) are each between the convex portions (32);
the convex portion (32) has a top surface (32a), two side surfaces (32b), and two ridge lines (32c);
the two side surfaces (32b) of the convex portion (32) face each other;
the two ridge lines (32c) of the convex portion (32) are ridge lines connecting the top surface (32a) of the convex portion (32) and the two side surfaces (32b) of the convex portion (32); and
the two ridge lines (32c) of the convex portion (32) extend in the direction from the second side portion (12d) toward the first side portion (12c).

2. The battery case (1) according to claim 1, wherein an angle made by the top surface (32a) of the convex portion (32) and the side surface of the convex portion (32) is 90 to 95 degrees.

3. The battery case (1) according to claim 1 or 2, wherein a height a of the convex portion (32) and a width b of the convex portion (32) in a cross section perpendicular to the ridge lines of the convex portion, and, a length d of the convex portion (32) in an extending direction of the ridge lines satisfy the relations of 0.2 ≤ a/d ≤ 0.3 and 0.2 ≤ b/d ≤ 0.3.

4. The battery case (1) according to any one of claims 1 to 3, comprising a reinforcing member (40), wherein:
the reinforcing member (40) extends along a longitudinal direction of the impact absorbing member (30); and
the reinforcing member (40) is joined to an end face portion opposite to an end face portion that is joined to the battery tray (10) in the impact absorbing member (30).

5. The battery case (1) according to any one of claims 1 to 3, comprising a reinforcing member (40), wherein:
the reinforcing member (40) extends along a longitudinal direction of the impact absorbing member (30); and
the reinforcing member (40) includes a first face (41) and a second face (42), wherein:
the first face (41) is joined to the outer side of the side portion of the battery tray (10) to which the impact absorbing member (30) is joined; and
the second face (42) is joined to the top surfaces (32a) of the convex portions (32) of the impact absorbing member (30).

6. The battery case (1) according to claim 5, wherein
the reinforcing member (40) includes a third face (43), wherein:
the third face (43) is connected to the second face (42); and
the third face (43) is joined to an end face portion opposite to an end face portion that is joined to the battery tray (10) in the impact absorbing member (30).

7. The battery case (1) according to claim 5 or 6, wherein the reinforcing member (40) includes a slope between the first face (41) and the second face (42).

8. The battery case (1) according to according to claim 7, wherein
the reinforcing member (40) includes a plurality of ribs (45) on the slope, wherein:
the rib (45) has a top surface (45a), two side surfaces (45b), and two ridge lines (45c);
the top surface (45a) of the rib (45) is positioned on a further outer side of the battery tray (10) than the slope;
the two side surfaces (45b) of the rib face each other;
the two ridge lines (45c) of the rib (45) are ridge lines connecting the top surface (45a) of the rib (45) and the two side surfaces (45b) of the rib (45); and
the two ridge lines (45c) of the rib (45) extend from the first face (41) toward the second face (42) of the reinforcing member (40).

9. The battery case (1) according to claim 8, wherein the convex portions (32) of the impact absorbing member (30) and the ribs (45) of the reinforcing member (40) are alternately positioned along the longitudinal direction of the side portion of the battery tray (10) to which the impact absorbing member (30) is joined.

10. A method for manufacturing a battery case (1) of an automobile, the method comprising
manufacturing the battery case (1) including:
a battery tray (10);
a plurality of cross frame parts (20, 12a, 12b); and
an impact absorbing member (30), wherein:
the battery tray (10) has a bottom surface (11), a first side portion (12c), and a second side portion (12d);
the first side portion (12c) and the second side portion (12d) face each other;
the plurality of cross frame parts (20, 12a, 12b) extend in a direction from the second side portion (12d) toward the first side portion (12c);
the plurality of cross frame parts (20, 12a, 12b) are arranged at intervals along a longitudinal direction of the first side portion (12c); and
the impact absorbing member (30) includes a corrugated portion (31), wherein:
the corrugated portion (31) is formed in at least a longer range than an interval between the two cross frame parts (20, 12a, 12b);
the corrugated portion (31) has a plurality of bottom surfaces (31a) and a plurality of convex portions (32);
the bottom surfaces (31a) of the corrugated portion (31) are each between the convex portions (32);
the convex portion (32) has a top surface (32a), two side surfaces (32b), and two ridge lines (32c);
the two side surfaces (32b) of the convex portion (32) face each other; and
the two ridge lines (32c) of the convex portion (32) are ridge lines connecting the top surface (32a) of the convex portion (32) and the two side surfaces (32b) of the convex portion (32),
by joining, of both end face portions of the impact absorbing member (30) in an extending direction of the two ridge lines (32c) of the convex portion (32), one of the end face portions to an outer side of at least the first side portion (12c) of the first side portion (12c) and the second side portion (12d) of the battery tray (10).

11. The method for manufacturing the battery case (1) according to claim 10, wherein an angle made by the top surface (32a) of the convex portion (32) and the side surface of the convex portion (32) is 90 to 95 degrees.

12. The method for manufacturing the battery case (1) according to claim 10 or 11, wherein a height a of the convex portion (32) and a width b of the convex portion (32) in a cross section perpendicular to the ridge lines of the convex portion, and, a length d of the convex portion (32) in the extending direction of the ridge lines satisfy the relations of 0.2 ≤ a/d ≤ 0.3 and 0.2 ≤ b/d ≤ 0.3.

13. The method for manufacturing the battery case (1) according to any one of claims 10 to 12, wherein the battery case (1) is manufactured by joining a reinforcing member (40) extending along a longitudinal direction of the impact absorbing member (30) to an end face portion opposite to an end face portion that is joined to the battery tray (10) in the impact absorbing member (30).

14. The method for manufacturing the battery case (1) according to any one of claims 10 to 12, wherein the battery case (1) is manufactured by
using a reinforcing member (40) extending along a longitudinal direction of the impact absorbing member (30) and including a first face (41) and a second face (42),
joining the first face (41) of the reinforcing member (40) to the outer side of the side portion of the battery tray (10) to which the impact absorbing member (30) is joined, and
joining the second face (42) of the reinforcing member (40) to the top surfaces (32a) of the convex portions (32) of the impact absorbing member (30).

15. The method for manufacturing the battery case (1) according to claim 14, wherein the reinforcing member (40) includes a third face (43), and the battery case (1) is manufactured by
connecting the third face (43) to the second face (42); and
joining the third face (43) to an end face portion opposite to an end face portion that is joined to the battery tray (10) in the impact absorbing member (30).

16. The method for manufacturing the battery case (1) according to claim 14 or 15, wherein the reinforcing member (40) includes a slope (44) between the first face (41) and the second face (42).

17. The method for manufacturing the battery case (1) according to claim 16, wherein
the reinforcing member (40) includes a plurality of ribs (45) on the slope, wherein:
the rib (45) has a top surface (45a), two side surfaces (45b), and two ridge lines (45c);
the top surface (45a) of the rib (45) is positioned on a further outer side of the battery tray (10) than the slope;
the two side surfaces (45b) of the rib (45) face each other;
the two ridge lines of the rib (45) are ridge lines connecting the top surface (45a) of the rib (45) and the two side surfaces (45b) of the rib (45); and
the two ridge lines of the rib (45) extend from the first face (41) toward the second face (42) of the reinforcing member (40).

18. The method for manufacturing the battery case (1) according to claim 17, wherein the convex portions (32) of the impact absorbing member (30) and the ribs (45) of the reinforcing member (40) are alternately positioned along the longitudinal direction of the side portion of the battery tray (10) to which the impact absorbing member (30) is joined.

## Patentansprüche

1. Batteriegehäuse (1) eines Kraftfahrzeugs, aufweisend:
einen Batterieträger (10);
mehrere Querrahmenteile (20, 12a, 12b); und
ein stoßabsorbierendes Element (30), wobei:
der Batterieträger (10) eine Bodenfläche (11), einen ersten Seitenabschnitt (12c) und einen zweiten Seitenabschnitt (12d) aufweist;
der erste Seitenabschnitt (12c) und der zweite Seitenabschnitt (12d) einander zugewandt sind;
sich die mehreren Querrahmenteile (20, 12a, 12b) in einer Richtung vom zweiten Seitenabschnitt (12d) zum ersten Seitenabschnitt (12c) erstrecken;
die mehreren Querrahmenteile (20, 12a, 12b) in Abständen entlang einer Längsrichtung des ersten Seitenabschnitts (12c) angeordnet sind;
das stoßabsorbierende Element (30) mit einer Außenseite von mindestens dem ersten Seitenabschnitt (12c) von erstem Seitenabschnitt (12c) und zweitem Seitenabschnitt (12d) verbunden ist; und
das stoßabsorbierende Element (30) einen gewellten Abschnitt (31) aufweist,
wobei:
der gewellte Abschnitt (31) in mindestens einem längeren Bereich als ein Abstand zwischen den beiden Querrahmenteilen (20, 12a, 12b) ausgebildet ist;
der gewellte Abschnitt (31) mehrere Bodenflächen (31a) und mehrere konvexe Abschnitte (32) aufweist;
die Bodenflächen (31a) des gewellten Abschnitts (31) jeweils zwischen den konvexen Abschnitten (32) liegen;
der konvexe Abschnitt (32) eine Oberseite (32a), zwei Seitenflächen (32b) und zwei Gratlinien (32c) aufweist;
die beiden Seitenflächen (32b) des konvexen Abschnitts (32) einander zugewandt sind;
die beiden Gratlinien (32c) des konvexen Abschnitts (32) Gratlinien sind, die die Oberseite (32a) des konvexen Abschnitts (32) und die beiden Seitenflächen (32b) des konvexen Abschnitts (32) verbinden; und
sich die beiden Gratlinien (32c) des konvexen Abschnitts (32) in der Richtung von dem zweiten Seitenabschnitt (12d) zum ersten Seitenabschnitt (12c) erstrecken.

2. Batteriegehäuse (1) nach Anspruch 1, wobei ein Winkel zwischen der Oberseite (32a) des konvexen Abschnitts (32) und der Seitenfläche des konvexen Abschnitts (32) 90 bis 95 Grad beträgt.

3. Batteriegehäuse (1) nach Anspruch 1 oder 2, wobei eine Höhe a des konvexen Abschnitts (32) und eine Breite b des konvexen Abschnitts (32) in einem Querschnitt senkrecht zu den Gratlinien des konvexen Abschnitts und eine Länge d des konvexen Abschnitts (32) in einer Erstreckungsrichtung der Gratlinien die Beziehungen 0,2 ≤ a/d ≤ 0,3 und 0,2 ≤ b/d ≤ 0,3 erfüllen.

4. Batteriegehäuse (1) nach einem der Ansprüche 1 bis 3, aufweisend ein Verstärkungselement (40), wobei:
sich das Verstärkungselement (40) entlang einer Längsrichtung des stoßabsorbierenden Elements (30) erstreckt; und
das Verstärkungselement (40) mit einem Endflächenabschnitt verbunden ist, der einem Endflächenabschnitt gegenüberliegt, der mit dem Batterieträger (10) in dem stoßabsorbierenden Element (30) verbunden ist.

5. Batteriegehäuse (1) nach einem der Ansprüche 1 bis 3, aufweisend ein Verstärkungselement (40), wobei:
sich das Verstärkungselement (40) entlang einer Längsrichtung des stoßabsorbierenden Elements (30) erstreckt; und
das Verstärkungselement (40) eine erste Fläche (41) und eine zweite Fläche (42) aufweist,
wobei:
die erste Fläche (41) mit der Außenseite des Seitenabschnitts des Batterieträgers (10) verbunden ist, mit dem das stoßabsorbierende Element (30) verbunden ist; und
die zweite Fläche (42) mit den oberen Flächen (32a) der konvexen Abschnitte (32) des stoßabsorbierenden Elements (30) verbunden ist.

6. Batteriegehäuse (1) nach Anspruch 5, wobei
das Verstärkungselement (40) eine dritte Fläche (43) aufweist, wobei:
die dritte Fläche (43) mit der zweiten Fläche (42) verbunden ist; und
die dritte Fläche (43) mit einem Endflächenabschnitt verbunden ist, der einem Endflächenabschnitt gegenüberliegt, der mit dem Batterieträger (10) in dem stoßabsorbierenden Element (30) verbunden ist.

7. Batteriegehäuse (1) nach Anspruch 5 oder 6, wobei das Verstärkungselement (40) eine Schräge zwischen der ersten Fläche (41) und der zweiten Fläche (42) aufweist.

8. Batteriegehäuse (1) nach Anspruch 7, wobei
das Verstärkungselement (40) an der Schräge mehrere Rippen (45) aufweist,
wobei:
die Rippe (45) eine Oberseite (45a), zwei Seitenflächen (45b) und zwei Gratlinien (45c) aufweist;
die Oberseite (45a) der Rippe (45) auf einer weiter außen liegenden Seite des Batterieträgers (10) als die Schräge positioniert ist;
die beiden Seitenflächen (45b) der Rippe einander zugewandt sind;
die beiden Gratlinien (45c) der Rippe (45) Gratlinien sind, die die Oberseite (45a) der Rippe (45) und die beiden Seitenflächen (45b) der Rippe (45) verbinden;
und
sich die beiden Gratlinien (45c) der Rippe (45) von der ersten Fläche (41) zur zweiten Fläche (42) des Verstärkungselements (40) erstrecken.

9. Batteriegehäuse (1) nach Anspruch 8, wobei die konvexen Abschnitte (32) des stoßabsorbierenden Elements (30) und die Rippen (45) des Verstärkungselements (40) abwechselnd entlang der Längsrichtung des Seitenabschnitts des Batterieträgers (10) positioniert sind, mit dem das stoßabsorbierende Element (30) verbunden ist.

10. Verfahren zum Herstellen eines Batteriegehäuses (1) eines Kraftfahrzeugs, wobei das Verfahren umfasst:
Herstellen des Batteriegehäuses (1), umfassend:
einen Batterieträger (10);
mehrere Querrahmenteile (20, 12a, 12b); und
ein stoßabsorbierendes Element (30), wobei:
das Batterieträger (10) eine Bodenfläche (11), einen ersten Seitenabschnitt (12c)
und einem zweiten Seitenabschnitt (12d) aufweist;
der erste Seitenabschnitt (12c) und der zweite Seitenabschnitt (12d) einander zugewandt sind;
sich die mehreren Querrahmenteile (20, 12a, 12b) vom zweiten Seitenabschnitt (12d) zum ersten Seitenabschnitt (12c) erstrecken;
die mehreren Querrahmenteile (20, 12a, 12b) in Abständen entlang einer Längsrichtung des ersten Seitenabschnitts (12c) angeordnet sind; und
das stoßabsorbierende Element (30) einen gewellten Abschnitt (31) aufweist, wobei:
der gewellte Abschnitt (31) in mindestens einem längeren Bereich als ein Abstand zwischen den beiden Querrahmenteilen (20, 12a, 12b) ausgebildet ist;
der gewellte Abschnitt (31) mehrere Bodenflächen (31a) und mehrere konvexe Abschnitte (32) aufweist;
die Bodenflächen (31a) des gewellten Abschnitts (31) jeweils zwischen den konvexen Abschnitten (32) liegen;
der konvexe Abschnitt (32) eine Oberseite (32a), zwei Seitenflächen (32b) und zwei Gratlinien (32c) aufweist;
die beiden Seitenflächen (32b) des konvexen Abschnitts (32) einander zugewandt sind; und
die beiden Gratlinien (32c) des konvexen Abschnitts (32) Gratlinien sind, die die Oberseite (32a) des konvexen Abschnitts (32) und die beiden Seitenflächen (32b) des konvexen Abschnitts (32) verbinden,
indem sie einen der Endflächenabschnitte mit einer Außenseite mindestens des ersten Seitenabschnitts (12c) von dem ersten Seitenabschnitt (12c) und dem zweiten Seitenabschnitt (12d) des Batterieträgers (10) für beide Endflächenabschnitte des stoßabsorbierenden Elements (30) in einer Erstreckungsrichtung der beiden Gratlinien (32c) des konvexen Abschnitts (32) verbinden.

11. Verfahren zur Herstellung des Batteriegehäuses (1) nach Anspruch 10, wobei ein Winkel, der von der Oberseite (32a) des konvexen Abschnitts (32) und der Seitenfläche des konvexen Abschnitts (32) gebildet wird, 90 bis 95 Grad beträgt.

12. Verfahren zur Herstellung des Batteriegehäuses (1) nach Anspruch 10 oder 11, wobei eine Höhe a des konvexen Abschnitts (32) und eine Breite b des konvexen Abschnitts (32) in einem Querschnitt senkrecht zu den Gratlinien des konvexen Abschnitts und eine Länge d des konvexen Abschnitts (32) in der Erstreckungsrichtung der Gratlinien die Beziehungen 0.2 ≤ a/d ≤ 0,3 und 0,2 ≤ b/d ≤ 0,3 erfüllen.

13. Verfahren zur Herstellung des Batteriegehäuses (1) nach einem der Ansprüche 10 bis 12, wobei das Batteriegehäuse (1) hergestellt wird, indem ein Verstärkungselement (40), das sich entlang einer Längsrichtung des stoßabsorbierenden Elements (30) erstreckt, mit einem Endflächenabschnitt verbunden wird, der einem Endflächenabschnitt gegenüberliegt, der mit dem Batterieträger (10) in dem stoßabsorbierenden Element (30) verbunden wird.

14. Verfahren zur Herstellung des Batteriegehäuses (1) nach einem der Ansprüche 10 bis 12, wobei das Batteriegehäuse (1) hergestellt wird durch
Verwenden eines Verstärkungselements (40), das sich entlang einer Längsrichtung des stoßabsorbierenden Elements (30) erstreckt und eine erste Fläche (41) und eine zweite Fläche (42) aufweist,
Verbinden der ersten Fläche (41) des Verstärkungselements (40) mit der Außenseite des Seitenabschnitts des Batterieträgers (10), mit dem das stoßabsorbierende Element (30) verbunden ist, und
Verbinden der zweiten Fläche (42) des Verstärkungselements (40) mit den Oberseiten (32a) der konvexen Abschnitte (32) des stoßabsorbierenden Elements (30).

15. Verfahren zur Herstellung des Batteriegehäuses (1) nach Anspruch 14, wobei das Verstärkungselement (40) eine dritte Fläche (43) aufweist und das Batteriegehäuse (1) hergestellt wird durch
Verbinden der dritten Fläche (43) mit der zweiten Fläche (42); und
Verbinden der dritten Fläche (43) mit einem Endflächenabschnitt, der einem Endflächenabschnitt gegenüberliegt, der mit dem Batterieträger (10) in dem stoßabsorbierenden Element (30) verbunden ist.

16. Verfahren zur Herstellung des Batteriegehäuses (1) nach Anspruch 14 oder 15, wobei das Verstärkungselement (40) eine Schräge (44) zwischen der ersten Fläche (41) und der zweiten Fläche (42) aufweist.

17. Verfahren zur Herstellung des Batteriegehäuses (1) nach Anspruch 16, wobei das Verstärkungselement (40) an der Schräge mehrere Rippen (45) aufweist, wobei:
die Rippe (45) eine Oberseite (45a), zwei Seitenflächen (45b) und zwei Gratlinien (45c) aufweist;
die Oberseite (45a) der Rippe (45) auf einer weiter außen liegenden Seite des Batterieträgers (10) als die Schräge positioniert ist;
die beiden Seitenflächen (45b) der Rippe (45) einander zugewandt sind;
die beiden Gratlinien der Rippe (45) Gratlinien sind, die die Oberseite (45a) der Rippe (45) und die beiden Seitenflächen (45b) der Rippe (45) verbinden; und
sich die beiden Gratlinien der Rippe (45) von der ersten Fläche (41) zur zweiten Fläche (42) des Verstärkungselements (40) erstrecken.

18. Verfahren zur Herstellung des Batteriegehäuses (1) nach Anspruch 17, wobei die konvexen Abschnitte (32) des stoßabsorbierenden Elements (30) und die Rippen (45) des Verstärkungselements (40) abwechselnd entlang der Längsrichtung des Seitenabschnitts des Batterieträgers (10) angeordnet sind, mit dem das stoßabsorbierende Element (30) verbunden ist.

## Revendications

1. Boîtier de batterie (1) d'une automobile comprenant :
un support de batterie (10) ;
une pluralité de parties de cadre croisé (20, 12a, 12b) ; et
un élément d'absorption de choc (30), dans lequel :
le support de batterie (10) a une surface inférieure (11), une première partie latérale (12c) et une deuxième partie latérale (12d) ;
la première partie latérale (12c) et la deuxième partie latérale (12d) se font face ;
la pluralité de parties de cadre croisé (20, 12a, 12b) s'étendent dans une direction de la deuxième partie latérale (12d) vers la première partie latérale (12c) ;
la pluralité de parties de cadre croisé (20, 12a, 12b) sont agencées à intervalles le long d'une direction longitudinale de la première partie latérale (12c) ;
l'élément d'absorption de choc (30) est assemblé à un côté externe au moins de la première partie latérale (12c) de la première partie latérale (12c) et de la deuxième partie latérale (12d) ; et
l'élément d'absorption de choc (30) comprend une partie ondulée (31), dans lequel :
la partie ondulée (31) est formée dans au moins une plage plus longue qu'un intervalle entre les deux parties de cadre croisé (20, 12a, 12b) ;
la partie ondulée (31) a une pluralité de surfaces inférieures (31a) et une pluralité de parties convexes (32) ;
les surfaces inférieures (31a) de la partie ondulée (31) sont chacune entre les parties convexes (32) ;
la partie convexe (32) a une surface supérieure (32a), deux surfaces latérales (32b) et deux lignes de crête (32c) ;
les deux surfaces latérales (32b) de la partie convexe (32) se font face ;
les deux lignes de crête (32c) de la partie convexe (32) sont des lignes de crête raccordant la surface supérieure (32a) de la partie convexe (32) et les deux surfaces latérales (32b) de la partie convexe (32) ; et
les deux lignes de crête (32c) de la partie convexe (32) s'étendent dans la direction de la deuxième partie latérale (12d) vers la première partie latérale (12c).

2. Boîtier de batterie (1) selon la revendication 1, dans lequel un angle réalisé par la surface supérieure (32a) de la partie convexe (32) et la surface latérale de la partie convexe (32) est de 90 à 95 degrés.

3. Boîtier de batterie (1) selon la revendication 1 ou 2, dans lequel une hauteur a de la partie convexe (32) et une largeur b de la partie convexe (32) dans une section transversale perpendiculaire aux lignes de crête de la partie convexe, et une longueur d de la partie convexe (32) dans une direction d'extension des lignes de crête satisfont les relations de 0,2≤a/d≤ 0,3 et 0,2≤b/d≤0,3.

4. Boîtier de batterie (1) selon l'une quelconque des revendications 1 à 3, comprenant :
un élément de renforcement (40), dans lequel :
l'élément de renforcement (40) s'étend le long d'une direction longitudinale de l'élément d'absorption de choc (30) ; et
l'élément de renforcement (40) est assemblé à une partie de face d'extrémité opposée à une partie de face d'extrémité qui est assemblée au support de batterie (10) dans l'élément d'absorption de choc (30).

5. Boîtier de batterie (1) selon l'une quelconque des revendications 1 à 3, comprenant :
un élément de renforcement (40), dans lequel :
l'élément de renforcement (40) s'étend le long d'une direction longitudinale de l'élément d'absorption de choc (30) ; et
l'élément de renforcement (40) comprend une première face (41) et une deuxième face (42), dans lequel :
la première face (41) est assemblée au côté externe de la partie latérale du support de batterie (10) auquel l'élément d'absorption de choc (30) est assemblé ; et
la deuxième face (42) est assemblée aux surfaces supérieures (32a) des parties convexes (32) de l'élément d'absorption de choc (30).

6. Boîtier de batterie (1) selon la revendication 5, dans lequel :
l'élément de renforcement (40) comprend une troisième face (43), dans lequel :
la troisième face (43) est raccordée à la deuxième face (42) ; et
la troisième face (43) est assemblée à une partie de face d'extrémité opposée à une partie de face d'extrémité qui est assemblée au support de batterie (10) dans l'élément d'absorption de choc (30).

7. Boîtier de batterie (1) selon la revendication 5 ou 6, dans lequel l'élément de renforcement (40) comprend une inclinaison entre la première face (41) et la deuxième face (42).

8. Boîtier de batterie (1) selon la revendication 7, dans lequel :
l'élément de renforcement (40) comprend une pluralité de nervures (45) sur l'inclinaison, dans lequel :
la nervure (45) a une surface supérieure (45a), deux surfaces latérales (45b), et deux lignes de crête (45c) ;
la surface supérieure (45a) de la nervure (45) est positionnée sur un côté plus extérieur du support de batterie (10) que l'inclinaison ;
les deux surfaces latérales (45b) de la nervure se font face ;
les deux lignes de crête (45c) de la nervure (45) sont des lignes de crête raccordant la surface supérieure (45a) de la nervure (45) et les deux surfaces latérales (45b) de la nervure (45) ; et
les deux lignes de crête (45c) de la nervure (45) s'étendent à partir de la première face (41) vers la deuxième face (42) de l'élément de renforcement (40).

9. Boîtier de batterie (1) selon la revendication 8, dans lequel les parties convexes (32) de l'élément d'absorption de choc (30) et les nervures (45) de l'élément de renforcement (40) sont positionnées de manière alternée le long de la direction longitudinale de la partie latérale du support de batterie (10) auquel l'élément d'absorption de choc (30) est assemblé.

10. Procédé pour fabriquer un boîtier de batterie (1) d'une automobile, le procédé comprenant les faits de :
fabriquer le boîtier de batterie (1) comprenant :
un support de batterie (10) ;
une pluralité de parties de cadre croisé (20, 12a, 12b) ; et
un élément d'absorption de choc (30), dans lequel :
le support de batterie (10) a une surface inférieure (11), une première partie latérale (12c) et une deuxième partie latérale (12d) ;
la première partie latérale (12c) et la deuxième partie latérale (12d) se font face ;
la pluralité de parties de cadre croisé (20, 12a, 12b) s'étendent dans une direction de la deuxième partie latérale (12d) vers la première partie latérale (12c) ;
la pluralité de parties de cadre croisé (20, 12a, 12b) sont agencées à intervalles le long d'une direction longitudinale de la première partie latérale (12c) ; et
l'élément d'absorption de choc (30) comprend une partie ondulée (31), dans lequel :
la partie ondulée (31) est formée dans au moins une plage plus longue qu'un intervalle entre les deux parties de cadre croisé (20, 12a, 12b) ;
la partie ondulée (31) a une pluralité de surfaces inférieures (31a) et une pluralité de parties convexes (32) ;
les surfaces inférieures (31a) de la partie ondulée (31) sont chacune entre les parties convexes (32) ;
la partie convexe (32) a une surface supérieure (32a), deux surfaces latérales (32b) et deux lignes de crête (32c) ;
les deux surfaces latérales (32b) de la partie convexe (32) se font face ; et
les deux lignes de crête (32c) de la partie convexe (32) sont des lignes de crête raccordant la surface supérieure (32a) de la partie convexe (32) et les deux surfaces latérales (32b) de la partie convexe (32),
en assemblant, sur les deux parties de face d'extrémité de l'élément d'absorption de choc (30) dans une direction d'extension des deux lignes de crête (32c) de la partie convexe (32), l'une des parties de face d'extrémité à un côté externe d'au moins la première partie latérale (12c) de la première partie latérale (12c) et la deuxième partie latérale (12d) du support de batterie (10).

11. Procédé pour fabriquer le boîtier de batterie (1) selon la revendication 10, dans lequel un angle réalisé par la surface supérieure (32a) de la partie convexe (32) et la surface latérale de la partie convexe (32) est de 90 à 95 degrés.

12. Procédé pour fabriquer le boîtier de batterie (1) selon la revendication 10 ou 11, dans lequel une hauteur a de la partie convexe (32) et une largeur b de la partie convexe (32) dans une section transversale perpendiculaire aux lignes de crête de la partie convexe, et une longueur d de la partie convexe (32) dans la direction d'extension des lignes de crête satisfont les relations de 0,2≤a/d≤ 0,3 et 0,2≤b/d≤0,3.

13. Procédé pour fabriquer le boîtier de batterie (1) selon l'une quelconque des revendications 10 à 12, dans lequel le boîtier de batterie (1) est fabriqué en assemblant un élément de renforcement (40) s'étendant le long d'une direction longitudinale de l'élément d'absorption de choc (30) à une partie de face d'extrémité opposée à une partie de face d'extrémité qui est assemblée au support de batterie (10) dans l'élément d'absorption de choc (30).

14. Procédé pour fabriquer le boîtier de batterie (1) selon l'une quelconque des revendications 10 à 12, dans lequel le boîtier de batterie (1) est fabriqué en :
utilisant un élément de renforcement (40) s'étendant le long d'une direction longitudinale de l'élément d'absorption de choc (30) et comprenant une première face (41) et une deuxième face (42),
assemblant la première face (41) de l'élément de renforcement (40) au côté externe de la partie latérale du support de batterie (10) auquel l'élément d'absorption de choc (30) est assemblé, et
assemblant la deuxième face (42) de l'élément de renforcement (40) aux surfaces supérieures (32a) des parties convexes (32) de l'élément d'absorption de choc (30).

15. Procédé pour fabriquer le boîtier de batterie (1) selon la revendication 14, dans lequel l'élément de renforcement (40) comprend une troisième face (43), et le boîtier de batterie (1) est fabriqué en :
raccordant la troisième face (43) à la deuxième face (42) ; et
assemblant la troisième face (43) à une partie de face d'extrémité opposée à une partie de face d'extrémité qui est assemblée au support de batterie (10) dans l'élément d'absorption de choc (30).

16. Procédé pour fabriquer le boîtier de batterie (1) selon la revendication 14 ou 15, dans lequel l'élément de renforcement (40) comprend une inclinaison (44) entre la première face (41) et la deuxième face (42).

17. Procédé pour fabriquer le boîtier de batterie (1) selon la revendication 16, dans lequel :
l'élément de renforcement (40) comprend une pluralité de nervures (45) sur l'inclinaison, dans lequel :
la nervure (45) a une surface supérieure (45a), deux surfaces latérales (45b), et deux lignes de crête (45c) ;
la surface supérieure (45a) de la nervure (45) est positionnée sur un côté plus extérieur du support de batterie (10) que l'inclinaison ;
les deux surfaces latérales (45b) de la nervure (45) se font face ;
les deux lignes de crête de la nervure (45) sont des lignes de crête raccordant la surface supérieure (45a) de la nervure (45) et les deux surfaces latérales (45b) de la nervure (45) ; et
les deux lignes de crête de la nervure (45) s'étendent de la première face (41) vers la deuxième face (42) de l'élément de renforcement (40).

18. Procédé pour fabriquer le boîtier de batterie (1) selon la revendication 17, dans lequel les parties convexes (32) de l'élément d'absorption de choc (30) et les nervures (45) de l'élément de renforcement (40) sont positionnées de manière alternée le long de la direction longitudinale de la partie latérale du support de batterie (10) auquel l'élément d'absorption de choc (30) est assemblé.
